(19) Europäisches Patentamt
European Patent Office
Office européen des brevets

(11) EP 4 234 636 A1

(12) EUROPEAN PATENT APPLICATION
published in accordance with Art. 153(4) EPC

(43) Date of publication:
**30.08.2023 Bulletin 2023/35**

(21) Application number: **21886028.6**

(22) Date of filing: **20.10.2021**

(51) International Patent Classification (IPC):
***C09C 1/28*** (2006.01) ***C09C 3/08*** (2006.01)
***C09D 201/00*** (2006.01) ***C09D 7/41*** (2018.01)
***C09D 7/62*** (2018.01)

(52) Cooperative Patent Classification (CPC):
**C09C 1/28; C09C 3/08; C09D 7/41; C09D 7/62; C09D 201/00**

(86) International application number:
**PCT/JP2021/038765**

(87) International publication number:
**WO 2022/091909 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2020 JP 2020178523**
**26.10.2020 JP 2020178525**

(71) Applicants:
- **JTEKT Corporation**
**Kariya-shi, Aichi-ken, 448-8652 (JP)**
- **National University Corporation Tokai National Higher Education and Research System**
**Nagoya-shi, Aichi 464-8601 (JP)**

(72) Inventors:
- **SAITO, Toshiyuki**
**Kariya-shi, Aichi 448-8652 (JP)**
- **YAMAGUCHI, Shotaro**
**Kariya-shi, Aichi 448-8652 (JP)**
- **TAKEOKA, Yukikazu**
**Nagoya-shi, Aichi 464-8601 (JP)**
- **SAKAI, Miki**
**Nagoya-shi, Aichi 464-8601 (JP)**

(74) Representative: **TBK**
**Bavariaring 4-6**
**80336 München (DE)**

# (54) PAINT COLOR MATERIAL, PRODUCTION METHOD FOR PAINT COLOR MATERIAL, AND PRODUCTION METHOD FOR COATING MATERIAL

(57) The present invention relates to: a paint color material that has a core part and a pigment layer including ferric tannate formed around the core part, contains color material particles having a particle diameter corresponding to the wavelength of a structural coloration, and exhibits a coloration by means of the pigment layer and the structural coloration; a production method for a paint color material; and a production method for a coating material.

EP 4 234 636 A1

## Description

TECHNICAL FIELD

The present disclosure relates to a paint color material, a method for producing a coated product, and a method for producing a coated product.

BACKGROUND ART

As a paint color material, there has been known a color material that develops a structural color different from a pigmentary color caused by light absorption. The structural color is generally a color generated by interference or scattering of visible light caused by the structure of a color material. Therefore, the color material that develops the structural color is advantageous in that discoloration due to sunlight is less likely to occur as compared with a general organic-based pigment, dye, or the like, and an environmental load is less likely to occur as compared with a general organic-based pigment, inorganic-based pigment, or the like. For example, Patent Literature 1 discloses a composition containing particles having a core-shell structure and capable of forming a film with a structural color.

CITATION LIST

PATENT LITERATURE

Patent Literature 1: JP-A-2014-47231

SUMMARY OF INVENTION

TECHNICAL PROBLEM

As described above, the structural color has various advantages. Therefore, there has been a demand for a technique that can obtain an unprecedented and novel color using a structural color.

SOLUTION TO PROBLEM

The present disclosure can be implemented as the following forms.

(1) A paint color material including color material particles that each include a core portion and a pigmentary layer being formed around the core portion and containing an iron tannate, and that each have a particle diameter corresponding to a wavelength of a structural color, in which the paint color material develops a color by the pigmentary layer and the structural color.
According to such a mode, the paint color material develops a novel color by the pigmentary layer and the structural color.
(2) The paint color material according to (1), further including a liquid portion, in which the color is adjustable depending on a liquid property of the liquid portion.
According to such a mode, the paint color material develops a novel color that can be adjusted depending on the liquid property of the liquid portion.
(3) The paint color material according to (1), in which the paint color material is a paint color material to be applied onto a support, and the color is adjustable depending on an applied thickness.
According to such a mode, by changing the applied thickness of the paint color material, an intensity ratio of reflected light of the structural color to reflected light of the pigmentary layer can be changed, and the color can be freely changed. Therefore, the paint color material develops a novel color that can be adjusted depending on the applied thickness.
(4) The paint color material according to (3), in which the color is adjustable depending on a water absorbing property of the support in addition to the applied thickness.
According to such a mode, the paint color material develops a novel color that can be adjusted depending on the water absorbing property of the support in addition to the applied thickness.
(5) A method for producing a paint color material developing a color by a pigmentary color and a structural color, the method including: a first step of obtaining a mixed liquid containing color material particles by alternately adding and mixing a liquid obtained by suspending core particles each having a uniform particle diameter in a solution containing Fe and a liquid containing tannic acid into a liquid containing water as a main component, the color material particles each including a core portion formed by the core particle and a pigmentary layer that is formed around the core portion and contains an iron tannate, and each having a particle diameter corresponding to a wavelength of the structural color; and a second step of washing the color material particles.
According to such a mode, a paint color material that develops a novel color by the pigmentary color of the pigmentary layer and the structural color can be produced.
(6) The production method according to (5), in which in the mixed liquid, a ratio of the number of moles of the Fe to the number of moles of the core particles is $5.41 \times 10^{-4}$ or more, and a ratio of the number of moles of the tannic acid to the number of moles of the core particles is $3.61 \times 10^{-4}$ or more.
According to such a mode, the pigmentary layer can be more effectively formed around each of the core particles.
(7) The production method according to (5) or (6), in which a pH of the mixed liquid is adjusted to 7.0 or more prior to the second step.
According to such a mode, the color developed by the pigmentary layer of the paint color material can be adjusted, and storage stability of the paint color material can be improved.

(8) The production method according to any one of (5) to (7), further including a third step of, after the second step, additionally forming a pigmentary layer around each of the color material particles by alternately adding and mixing a liquid obtained by suspending the color material particles in a solution containing Fe and a liquid containing tannic acid into a liquid containing water as a main component.

According to such a mode, the thickness of the pigmentary layer of each of the color material particles can be increased. The thickness of the pigmentary layer of each of the color material particles can be adjusted by adjusting the number of times the third step is executed.

(9) A method for producing a coated product, the method including: a step of applying, onto a support, a paint containing particles that each include a core portion and a pigmentary layer being formed around the core portion and containing an iron tannate, and that each have a particle diameter corresponding to a wavelength of a structural color; and a step of adjusting a thickness of the paint onto the support to adjust a color developed by the pigmentary layer and the structural color.

According to such a mode, a coated product that develops a novel color which is adjusted depending on the applied thickness of the paint color material can be produced.

BRIEF DESCRIPTION OF DRAWINGS

[FIG. 1] FIG. 1 is a diagram showing an example of a method for producing a paint color material according to a first embodiment.

[FIG. 2] FIG. 2 is a first diagram showing samples prepared for experiments according to the first embodiment.

[FIG. 3] FIG. 3 is a second diagram showing samples prepared for the experiments according to the first embodiment.

[FIG. 4] FIG. 4 is a diagram showing a reflectance spectrum of a sample 1-1 and a sample 1-3 in an application state.

[FIG. 5] FIG. 5 is a diagram showing a reflectance spectrum of a sample 1-2 and a sample 1-4 in an application state.

[FIG. 6] FIG. 6 is a diagram showing an example of a method for producing a paint color material according to a second embodiment.

[FIG. 7] FIG. 7 is a diagram showing an example of a method for additionally forming a pigmentary layer in the paint color material according to the second embodiment.

[FIG. 8] FIG. 8 is a process diagram showing an example of a method for producing a coated product according to the second embodiment.

[FIG. 9] FIG. 9 is a diagram showing coated products as samples prepared in experiments according to the second embodiment.

[FIG. 10] FIG. 10 is a diagram showing a reflectance spectrum of a sample 2-1 and a sample 2-6.

[FIG. 11] FIG. 11 is a diagram showing a relationship between an applied thickness and a reflected light intensity ratio in the sample 2-1.

[FIG. 12] FIG. 12 is a diagram showing a reflectance spectrum of a sample 2-4.

[FIG. 13] FIG. 13 is a diagram showing a relationship between an applied thickness and a reflected light intensity ratio in the sample 2-4.

[FIG. 14] FIG. 14 is a diagram showing a reflectance spectrum of a sample 2-5.

[FIG. 15] FIG. 15 is a diagram showing a relationship between an applied thickness and a reflected light intensity ratio in the sample 2-5.

DESCRIPTION OF EMBODIMENTS

A. First embodiment: A paint color material according to a first embodiment includes color material particles that each include a core portion and a pigmentary layer being formed around the core portion and containing an iron tannate, and that have a particle diameter corresponding to a wavelength of a structural color. Accordingly, the paint color material develops a color by the pigmentary layer and the structural color. The structural color is a color generated by interference or scattering of visible light caused by the structure of the color material. Therefore, in a color material that develops a structural color, discoloration due to sunlight is less likely to occur as compared with a general organic-based pigment or dye.

The color material particles included in the paint color material have a so-called core-shell shape, with the pigmentary layer as a shell portion. That is, the color material particle is formed by integrating the core portion and the pigmentary layer being formed around the core portion. In the present embodiment, a spherical silica (SiOz) particle having a uniform particle diameter is used as the core portion. A transparent or translucent material having a low Haze value is preferably used as the core portion. The Haze value is an index indicating a fog-degree of a material, and can be measured in accordance with JISK7136: 2000.

The pigmentary layer includes iron tannate and develops a pigmentary color caused by iron tannate. The pigmentary color is a color generated by absorption of light in a certain wavelength range and reflection of light in an unabsorbed wavelength range in a certain substance. A general organic-based or inorganic-based pigment or dye develops the pigmentary color. The iron tannate is known to be produced by, for example, a reaction between an iron salt such as iron (III) chloride and tannic acid. The iron tannate is known to develop different colors depending on a liquid property. Specifically, the iron tannate is dimerized to develop a bluish purple color under conditions of pH of 3.0 to 6.0, and is trimerized to develop a reddish brown color under conditions of pH of 7.0 or more. Accordingly, the pigmentary layer develops a strong bluish color under acidic conditions, and develops a strong reddish color under neutral or basic conditions.

As described above, the color material particles each have a particle diameter corresponding to a wavelength of the structural color. For example, when the paint color material is applied onto a support, the color material particles are arranged with periodicity onto the support. The paint color material develops a structural color having a wavelength corresponding to the particle diameter of each color material particles by the arrangement of the color material particles. For example, in the case where a colloidal crystal with a face-centered cubic lattice is formed by arranging the color material particles, a wavelength $\lambda$ of the structural color, an average refractive index $n_a$ of the colloidal crystal, and a particle diameter D of each of the color material particles have a relationship of the following equation (1).

$$\lambda = 1.633 n_a D \qquad (1)$$

The average refractive index $n_a$ is determined by a refractive index $n_i$ and a volume fraction $\Phi_i$ of a component i constituting the colloidal crystal, as shown in the following equation (2).

$$n_a^2 = \Sigma n_i^2 \Phi_i \qquad (2)$$

Hereinafter, a state where the paint color material is applied onto the support is also referred to as an "application state".

The particle diameter of the color material particle is determined by the size of the core portion and the thickness of the pigmentary layer. For example, in the present embodiment, the particle diameter of the color material particle is a value obtained by summing the particle diameter of the silica particle constituting the core portion and the thickness of the pigmentary layer. Therefore, by adjusting the diameter of the core portion and the thickness of the pigmentary layer, the particle diameter of the color material particle can be adjusted, and a desired structural color in the application state can be developed.

As in the first embodiment, in the case where the paint color material develops the structural color by the arrangement of the color material particles, a period of a structure of a portion that develops the structural color is short, and angle dependence of the color of the color material is low. On the other hand, for example, in the case where the color material develops a structural color by a portion formed in a thin film shape having a uniform film or a multi-layer film shape, the period of the structure of the portion that develops the structural color is long. In this case, the structure of the portion that develops the structural color is close to a so-called thin film interference model or multi-layer interference model, so that the angle dependence of the color material increases. In the case where the color material has high angle dependence, the color of the color material is likely to visually vary depending on an angle at which the color material is viewed and a direction in which the color material is irradiated with light.

The paint color material may further include a liquid portion in addition to the color material particles described above. The liquid portion may be, for example, any liquid such as water, and is preferably, for example, a liquid that does not cause loss of the structural color of the paint color material or the pigmentary color of the pigmentary layer due to a chemical reaction with the color material particles or the pigmentary layer. In the case where the paint color material includes the liquid portion, by changing a liquid property of the liquid portion, the color developed by iron tannate contained in the pigmentary layer described above can be changed, and the color developed by the paint color material can be changed. In addition, the paint color material may include, for example, an additive for improving storage stability of the paint.

The paint color material is used by being applied onto a support. For example, the paint color material including the liquid portion is applied onto a glass material serving as a support by spin coating, and dried to thereby obtain a coated product in which the paint color material is applied onto the support. As the support, for example, various materials having any shape such as a ceramic material, a metal material, a resin material, paper, and cloth in addition to the glass material can be used. The application of the paint color material onto the support may be performed by any method as long as the finished coated product develops the structural color, and may be performed, for example, by dropping or spraying the paint color material onto the support, or by using a writing brush, a brush or the like, in addition to the spin coating.

FIG. 1 is a diagram showing an example of a method for producing a paint color material according to the first embodiment. In the production method, first, in step S110, a first liquid and a second liquid are prepared. The first liquid is a suspension obtained by suspending core particles such as silica forming the core portions in a solution containing iron (Fe) as a solute. The second liquid is a solution containing tannic acid (TA). Next, in step S120, the first liquid and the second liquid are alternately added into and mixed with a third liquid containing water, such as pure water, as a main component. The main component of a certain composition means a component occupying 50 mass% or more of the composition. By executing step S120, the pigmentary layer is formed around each of the core particles to generate each of the color material particles, and a mixed liquid containing the color material particles is obtained. In the first embodiment, the color material particles and the mixed liquid obtained in step S120 are also referred to as first color material particles and a first mixed liquid, respectively. Thereafter, in step S130, the first color material particles obtained in step S120 are washed. In step S130, for example, impurities adhering to the first color material particles can be washed away by repeating an operation of centrifuging a mixture obtained by adding pure water to the first color material particles and discarding a supernatant generated by the centrifugation.

Further, in step S140, a fourth liquid and a fifth liquid are prepared. The fourth liquid is a suspension obtained by suspending color material particles in a solution containing Fe as a solute. The fifth liquid is a solution containing tannic acid, similar to the second liquid. In step S140, specifically, a suspension obtained by suspending the first color material particles washed in step S130 in a solution containing Fe is prepared as the fourth liquid. Then, in step S150, the fourth liquid and the fifth liquid are alternately added into and mixed with a sixth liquid containing water as a main component, similar to the third liquid. By executing step S150, a second mixed liquid containing second color material particles formed by additionally forming the pigmentary layer around each of the first color material particles is obtained. Thereafter, in step S160, the second color material particles obtained in step S150 are washed in the same manner as the first color material particles are washed in step S130. Step S120 may be referred to as a first step, step S130 may be referred to as a second step, step S150 may be referred to as a third step, and step S160 may be referred to as a fourth step.

For example, the production of the paint color material may be ended at a time point when step S130 is completed without executing steps from step S140 to step S160 shown in FIG. 1. In this case, the number of times of pigmentary layer formation in each of the color material particles contained in the paint color material is 1. After the completion of step S160, the steps similar to step S140 to step S160 may be repeated again to additionally form the pigmentary layer around each of the color material particles two or more times. For example, in the case where the pigmentary layer is additionally formed around each of the color material particles twice, the number of times of the pigmentary layer formation in each of the color material particles is 3 in total. In this case, for example, by preparing a suspension obtained by suspending the second color material particles in a solution containing Fe as the fourth liquid in the step similar to step S140 which is executed again, the pigmentary layer can be additionally formed around each of the second color material particles.

In the first mixed liquid obtained in step S120, it is preferred that a ratio of the number of moles of Fe to the number of moles of the core particles is $5.41 \times 10^{-4}$ or more, and a ratio of the number of moles of tannic acid to the number of moles of the core particles is $3.61 \times 10^{-4}$ or more. Therefore, in the first embodiment, in the first mixed liquid, it is preferred that $Fe/SiO_2$, which is the ratio of the number of moles of Fe to the number of moles of silica, is $5.41 \times 10^{-4}$ or more, and $TA/SiO_2$, which is the ratio of the number of moles of tannic acid to the number of moles of silica, is $3.61 \times 10^{-4}$ or more. Accordingly, the pigmentary layer can be more effectively formed around each of the core particles. The $Fe/SiO_2$ and $TA/SiO_2$ in the first mixed liquid can be adjusted, for example, by adjusting the number of moles of silica and the number of moles of Fe in the first liquid, the number of moles of tannic acid in the second liquid, and a mixing amount of the first liquid and the second liquid.

In the production method shown in FIG. 1, the pH of the first mixed liquid may be adjusted to 7.0 or more prior to the second step, i.e., step S130. In this case, for example, after the completion of step S120, the pH of the first mixed liquid can be adjusted by adding a base such as sodium hydroxide, a phosphate pH 7.0 buffer, or the like to the mixed liquid. By adjusting the pH of the first mixed liquid not after the second step, i.e., step S130 but prior to step S130, the storage stability of the paint color material can be improved while changing the color developed by the pigmentary layer in the application state. Similarly, by adjusting the pH of the second mixed liquid prior to the fourth step, i.e., step S160, the color developed by the pigmentary layer in the application state can be changed, and the storage stability of the paint color material can be improved.

The paint color material according to the present embodiment described above includes the color material particles that each include the core portion and the pigmentary layer including iron tannate, and that each have a particle diameter corresponding to a wavelength of the structural color. Therefore, the paint color material develops a novel color by the pigmentary layer and the structural color. Since the paint color material according to the first embodiment develops the color by the pigmentary layer and the structural color, the paint color material is less likely to lose color due to sunlight or the like, for example, as compared with a color material that develops only a pigmentary color such as a general organic-based pigment or dye. Further, since the color developed by the pigmentary layer is more likely to be discolored due to the sunlight or the like than the structural color, for example, the change in color over time in a coated product may be obtained, and the change in color over time can be used as an index of aging. In addition, by using, for example, silica or a material such as glass containing silica as a main component, as the material forming the core portion, an environmental load due to a color material can be reduced, and a novel color of the color material can be implemented as compared with a general organic-based or inorganic-based pigment.

In the first embodiment, the paint color material includes the liquid portion, and the color can be adjusted depending on the liquid property of the liquid portion.

Therefore, the paint color material develops a novel color that can be adjusted depending on the liquid property of the liquid portion.

The method for producing a paint color material according to the first embodiment includes the first step of obtaining the first mixed liquid containing the first color material particles by alternately adding and mixing the first liquid obtained by suspending the core particles each forming the core portion in the solution containing Fe and the second liquid containing tannic acid into the third liquid containing water as a main component, and the second step of washing the first color material particles. Therefore, a paint color material that develops a novel color by the pigmentary layer and the structural color can be produced.

In the method for producing a paint color material according to the first embodiment, in the first mixed liquid, the molar ratio of Fe to the core particles is $5.41 \times 10^{-4}$ or more, and the molar ratio of tannic acid to the core particles is $3.61 \times 10^{-4}$ or more. Therefore, the pigmentary layer can be more effectively formed around each of the core particles.

In the method for producing a paint color material according to the first embodiment, in the first step, the pH of the first mixed liquid is adjusted to 7.0 or more. Therefore, the color developed by the pigmentary layer of the paint color material can be adjusted, and storage stability of the paint color material can be improved.

The method for producing a paint color material according to the first embodiment includes the third step of additionally forming the pigmentary layer around each of the color material particles by alternately adding and mixing the fourth liquid obtained by suspending the color material particles in the solution containing Fe and the fifth liquid containing tannic acid into the sixth liquid containing water as a main component. Therefore, the thickness of the pigmentary layer of the color material particles can be increased.

The thickness of the pigmentary layer of each of the color material particles can be adjusted by adjusting the number of times the third step is executed.

B. Second embodiment: A paint color material according to a second embodiment includes particles that each include a core portion and a pigmentary layer being formed around the core portion and containing an iron tannate, and that each have a particle diameter corresponding to a wavelength of a structural color. The paint color material develops a color by the pigmentary layer and the structural color. The structural color is a color generated by interference or scattering of visible light caused by the structure of the color material. Therefore, in a color material that develops a structural color, discoloration due to sunlight is less likely to occur as compared with a general organic-based pigment or dye.

In the paint color material according to the second embodiment, by changing an applied thickness when the paint color material is applied onto a support, an intensity ratio between reflected light of the structural color and reflected light by the pigmentary layer can be changed, and the color developed by the paint color material can be freely changed. That is, the color developed by the paint color material can be adjusted depending on the applied thickness. Accordingly, even in the case where the same paint color material is used, the color can be made different depending on the applied thickness, and therefore, for example, a difference in color developed by the paint color material can be easily obtained by making a coating method, a tool used for coating, or the like different and making the applied thickness of the paint color material different.

The particles contained in the paint color material each have a so-called core-shell shape, with the pigmentary layer as a shell portion. That is, the particle is formed by integrating the core portion and the pigmentary layer formed around the core portion. Hereinafter, the particles each including the pigmentary layer formed around the core portion in the present embodiment are also referred to as color material particles. In the present embodiment, a spherical silica particle having a uniform particle diameter is used as the core portion. A transparent or translucent material having a low Haze value is preferably used as the core portion. The Haze value is an index indicating a fog-degree of a material, and can be measured in accordance with JISK7136: 2000.

The pigmentary layer includes iron tannate and develops a pigmentary color caused by iron tannate. The pigmentary color is a color generated by absorption of light in a certain wavelength range and reflection of light in an unabsorbed wavelength range in a certain substance. A general organic-based or inorganic-based pigment or dye develops the pigmentary color. The iron tannate is known to be produced by, for example, a reaction between an iron salt such as iron (III) chloride and tannic acid. The iron tannate is known to develop different colors depending on a liquid property. Specifically, the iron tannate is dimerized to develop a bluish purple color under conditions of pH of 3.0 to 6.0, and is trimerized to develop a reddish brown color or a reddish purple color under conditions of pH of 7.0 or more.

As described above, the color material particles each have a particle diameter corresponding to a wavelength of the structural color. For example, when the paint color material is applied onto a support, the color material particles are arranged with periodicity onto the support. The paint color material develops a structural color having a wavelength corresponding to the particle diameter of each of the color material particles by the arrangement of the color material particles. For example, in the case where a colloidal crystal with a face-centered cubic lattice is formed by arranging the color material particles, a wavelength $\lambda$ of the structural color, an average refractive index $n_a$ of the colloidal crystal, and a particle diameter D of each color material particles have a relationship of the following equation (3).

$$\lambda = 1.633 n_a D \qquad (3)$$

The average refractive index $n_a$ is determined by a refractive index $n_i$ and a volume fraction $\Phi_i$ of a component i constituting the colloidal crystal, as shown in the following equation (4).

$$n_a^2 = \Sigma n_i^2 \Phi_i \qquad (4)$$

Hereinafter, a state where the paint color material is applied onto the support is also referred to as an "application state".

The particle diameter of the color material particle is determined by the size of the core portion and the thickness of the pigmentary layer. For example, in the second embodiment, the particle diameter of the color material particle is a value obtained by summing the particle diameter of the silica particles constituting the core portion and the thickness of the pigmentary layer. Therefore, by adjusting the diameter of the core portion and the thickness of the pigmentary layer, the particle diameter of the color material particle can be adjusted, and a desired structural color in the application state can be developed.

As in the second embodiment, in the case where the paint color material develops the structural color by the arrangement of the color material particles, a period of a structure of a portion that develops the structural color is short, and angle dependence of the color of the color material is low. On the other hand, for example, in the case where the color material develops a structural color by a portion formed in a thin film shape having a uniform film or a multi-layer film shape, the period of the structure of the portion that develops the structural color is long. In this case, the structure of the portion that develops the structural color is close to a so-called thin film interference model or multi-layer interference model, so that the angle dependence of the color material increases. In the case where the color material has high angle dependence, the color of the color material is likely to visually vary depending on an angle at which the color material is viewed and a direction in which the color material is irradiated with light.

The paint color material is used by being applied onto a support. As the support, for example, various materials such as a glass material, a ceramic material, a metal material, a resin material, paper, and cloth in any shape can be used.

The color developed by the paint color material may be adjusted depending on a water absorbing property of the support onto which the paint color material is applied in addition to the applied thickness. The water absorbing property of the support may be adjusted, for example, depending on a material of the support, or may be adjusted by subjecting the support to a treatment such as coating.

FIG. 6 is a diagram showing an example of a method for producing a paint color material according to the second embodiment. In the production method, first, in step S2110, a liquid a and a liquid b are prepared. The liquid a is a suspension obtained by suspending particles such as silica forming the core portions in a solution containing iron (Fe) as a solute. The liquid b is a solution containing tannic acid. Next, in step S2120, the liquid a and the liquid b are mixed to generate a mixed liquid of the liquid a and the liquid b. In step S2120, for example, the liquid a and the liquid b are alternately added into water or the like, and the liquid a and the liquid b are mixed by stirring or the like. By executing step S2120, the color material particles are formed in the mixed liquid of the liquid a and the liquid b. Thereafter, in step S2130, the color material particles generated in step S2120 are washed to obtain a paint color material. In step S2130, for example, impurities adhering to the color material particles can be washed away by repeating an operation of centrifuging a mixture obtained by adding pure water to the color material particles and discarding a supernatant generated by the centrifugation. The pH of the mixed liquid may be adjusted after starting execution of step S2120 and before starting execution of step S2130. For example, by adding a base such as sodium hydroxide to the mixed liquid after the completion of step S2120 or the like, the color developed by the pigmentary layer in the application state can be changed.

FIG. 7 is a diagram showing an example of a method for additionally forming a pigmentary layer in the paint color material. As shown in FIG. 7, the thickness of the pigmentary layer can be increased by further forming a layer containing iron tannate around the pigmentary layer of the paint color material. First, in step S2210, a liquid c and a liquid d are prepared. The liquid c is a suspension obtained by suspending color material particles in a solution containing Fe as a solute. The liquid d is a solution containing tannic acid, similar to the liquid b. Next, in step S2220, the liquid c and the liquid d are mixed in the same manner as the liquid a and the liquid b are mixed in step S2120 in FIG. 6 to generate a mixed liquid of the liquid c and the liquid d. By executing step S2220, in the mixed liquid, a pigmentary layer is further formed around the pigmentary layer of each of the color material particles, and the thickness of the pigmentary layer is increased. Then, in step S2230, the color material particles obtained in step S2220 are washed in the same manner as in step S2120 in FIG. 6. Similar to the production method shown in FIG. 6, the pH of the mixed liquid may be adjusted after starting execution of step S2220 and before starting execution of step S2230. For example, the pigmentary layer may not be additionally formed, or the pigmentary layer may be additionally formed two or more times. In this way, the thickness of the pigmentary layer in the paint color material can be adjusted by adjusting the number of times the pigmentary layer is additionally formed.

FIG. 8 is a process diagram showing an example of a method for producing a coated product. A coated product is produced by applying a paint containing the paint color material according to the present embodiment onto a support. In the production method, first, in step S2310, the paint and the support are prepared. As the paint, for example, one obtained by dispersing the paint color material in a liquid such as water can be used. In the case where using a liquid other than water, for example, it is preferred to select a liquid that does not cause loss of the color developed by the pigmentary layer and the structural color of the paint color material due to a chemical reaction with the color material particles or the pigmentary layer. In addition, the paint may contain, for example, an additive for improving storage stability of the paint. Next, in step S2320, the paint is applied onto the support while adjusting the thickness of the paint onto the support such that the color developed by the pigmentary color and the structural color is a predetermined color. Specifically, in step S2320, for example, the number of times and an amount of the paint applied onto the support are adjusted such that the thickness of the paint after drying is a predetermined thickness. The application of the paint onto the support may be performed by any method as long as the finished coated product develops a structural color, and may be performed, for example, by dropping or spraying the paint onto the support, by using a writing brush, a brush or the like, or by spin coating. Thereafter, in step S2330, the paint applied onto the support is dried by natural drying or the like.

The thickness of the paint color material onto the support may be adjusted, for example, after coating in step S2320 or after drying in step S2330. By adjusting the water absorbing property of the support prepared in step S2310, the color developed by the paint color material in the application state can be adjusted depending on the water absorbing property of the support.

The paint color material according to the present embodiment described above includes the color material particles that each include the core portion and the pigmentary layer containing iron tannate, and that each have a particle diameter corresponding to a wavelength of the structural color. Accordingly, by changing the applied thickness of the paint color material, the intensity ratio between the reflected light of the structural color and the reflected light of the pigmentary layer can be changed, and the color can be freely changed. Therefore, the paint color material develops a novel color that can be adjusted depending on the applied thickness. Since the paint color material according to the present embodiment develops the color by the pigmentary layer and the structural color, the paint color material is less likely to lose color due to sunlight or the like, for example, as compared with a color material that develops only a pigmentary color such as a general organic-based pigment or dye. Further, since the color developed by the pigmentary layer is more likely to be discolored due to the sunlight or the like than the structural color, for example, the change in color over time in a coated product may be obtained, and the change in color over time can be used as an index of aging. In addition, by using, for example, silica or a material such as glass containing 50 mass% or more of silica as the material forming the core portion, an environmental load due to a color material can be reduced, and a novel color developed by the color material can be implemented as compared with a general organic-based and inorganic-based pigment.

In the second embodiment, the color developed by the paint color material is adjusted depending on the water absorbing property of the support in addition to the applied thickness. Therefore, the paint color material develops a novel color that can be adjusted depending on the water absorbing property of the support in addition to the applied thickness.

C. Experimental results according to the first embodiment: FIG. 2 is a first diagram showing samples prepared for experiments for verifying the effects of the first embodiment. FIG. 3 is a second diagram showing samples prepared for the experiments according to the first embodiment. As shown in FIGS. 2 and 3, a sample 1-1 to a sample 1-24 were prepared as experimental samples. FIG. 2 shows a particle diameter of a core portion, the number of times of pigmentary layer formation, a pH adjustment method, a molar concentration of silica, a molar concentration of Fe, a molar concentration of tannic acid, Fe/$SiO_2$, and TA/$SiO_2$ in the mixing step, a pH after washing, a color in a suspension state, and a color in an application state for the sample 1-1 to the sample 1-15. FIG. 3 shows a particle diameter of a core portion, the number of times of pigmentary layer formation, a pH adjustment method, a molar concentration of silica, a molar concentration of Fe, a molar concentration of tannic acid, Fe/$SiO_2$, and TA/$SiO_2$ in the mixing step, a pH after washing, and a color in a suspension state for the sample 1-16 to the sample 1-24.

Each of samples was prepared by the following method. A silica particle aqueous suspension manufactured by Fuji Chemical Industries Co., Ltd. was used as a silica particle aqueous suspension that is a raw material for silica particles serving as core particles. Specifically, a silica particle aqueous suspension having a density of 1.168 g/$cm^3$ and containing 26.3 mass% of silica particles each having a particle diameter of 268.3 nm was used in the preparation of the sample 1-1 and the sample 1-2, a silica particle aqueous suspension having a density of 1.163 g/$cm^3$ and containing 25.7 mass% of silica particles each having a particle diameter of 268.3 nm was used in the preparation of the sample 1-16 and the sample 1-17, a silica particle aqueous suspension having a density of 1.125 g/$cm^3$ and containing 20.5 mass% of silica particles each having a particle diameter of 268.3 nm was used in the preparation of the sample 1-5, the sample 1-9, the sample 1-10, the sample 1-13, the sample 1-14, and the sample 1-24, and a silica particle aqueous suspension having a density of 1.171 g/$cm^3$ and containing 26.8 mass% of silica particles each having a particle diameter of 322.4 nm was used in the preparation of the sample 1-6 to the sample 1-8, the sample 1-11, the sample 1-12, the sample 1-15, and the sample 1-18 to the sample 1-23. The average particle diameter of the silica particles was calculated based on measurement results of a particle size distribution by a dynamic light scattering method. Specifically, a median diameter (D50) of the silica particles calculated based on the measurement results by the dynamic light scattering method was used as the average particle diameter. The average particle diameter of the silica particles contained in the silica particle aqueous suspension used to prepare each color material was used as the average particle diameter of the core portion of each color material. As the second liquid, a tannic acid aqueous solution whose concentration is adjusted by adding pure water to tannic acid (molecular weight: 1701.19) manufactured by Kishida Chemical Co., Ltd. as a raw material of tannic acid was used.

The sample 1-1, the sample 1-2, and the sample 1-7 to the sample 1-24 were prepared according to the method for producing a paint color material shown in FIG. 1. First, an iron (III) chloride hexahydrate aqueous solution (molecular weight: 270.30), and a silica particle aqueous suspension were mixed using a vortex to prepare 0.6 ml of the first liquid of step S110. Prior to mix the iron (III) chloride hexahydrate aqueous solution and the silica particle aqueous suspension, the silica particle aqueous suspension was irradiated with ultrasonic waves for 90 minutes to improve the dispersibility of silica microparticles in the silica particle aqueous suspension. 0.6 ml of the second liquid was prepared. Next, in step S120, using a syringe, 1 drop (about 0.03 mL) of the first liquid and 1 drop (about 0.03 mL) of the second liquid were alternately added in a total of 0.6 mL of each liquid into pure water as the third liquid, and mixed using a stirrer to obtain the first mixed liquid containing the first color material particles. Thereafter, in step S130, first, the first mixed liquid was centrifuged, and the supernatant generated by the centrifugation was discarded to obtain a residue containing the first color material particles. Next, the first color material particles were washed by repeating an operation of mixing the residue with pure water by a vortex, further centrifuging the suspension obtained by mixing, and discarding the supernatant generated by centrifugation. In the sample 1-1, the sample 1-2, and the sample 1-7 to the sample 1-24, the molar concentration of silica, the molar concentration of Fe, the molar concentration of tannic acid, $Fe/SiO_2$, and $TA/SiO_2$ in the first mixed liquid were set to the molar concentration of silica, the molar concentration of Fe, the molar concentration of tannic acid, $Fe/SiO_2$, and $TA/SiO_2$ shown in FIGS. 2 and 3, respectively. In the sample 1-8 to the sample 1-24 in which the number of times of pigmentary layer formation was 1, the color material particles obtained in step S130 were suspended in 5.0 ml of pure water, the color of the color material particles in the suspension was visually observed, and the observed color was set as the "color in suspension state" shown in FIGS. 2 and 3. The pH of the suspension was measured, and the measured pH was defined as the "pH after washing" shown in FIGS. 2 and 3.

In the preparation of the sample 1-2, the sample 1-14, and the sample 1-15, prior to step S130, 0.2 mL of a 1 mol/L sodium hydroxide aqueous solution is added to the first mixed liquid obtained in step S120 to adjust the pH of the first mixed liquid. The pH immediately after adding sodium hydroxide was 8.0 in the sample 1-2 and the sample 1-14, and was 8.1 in the sample 1-15. In the preparation of the sample 1-13, prior to step S130, 0.5 ml of a 0.1 mol/L phosphate pH 7.0 buffer was added to the first mixed solution obtained in step S120, followed by stirring to adjust the pH of the first mixed liquid. In the sample 1-13, the pH immediately after adding the buffer was 7.2. In the preparation of the sample 1-24, after step S130, 0.5 ml of a 0.1 mol/L phosphate pH 7.0 buffer was added to the aqueous suspension of the color material particles prior to the measurement of the "pH after washing" described above. In the sample 1-24, the pH immediately after adding the buffer was 7.2. The pH 7.0 buffer was prepared by mixing 30.5 ml of 0.2 mol/L disodium hydrogen phosphate and 19.5 ml of 0.2 mol/L sodium dihydrogen phosphate, and further adding 50 ml of pure water thereto.

In the preparation of the sample 1-1, the sample 1-2, and the sample 1-7 in which the number of times of the pigmentary layer formation was 3, a suspension obtained by suspending the first color material particles obtained in step S130 in water was further prepared, and the prepared suspension of the color material particles and an iron (III) chloride hexahydrate aqueous solution similar to that in step S110 were mixed using a vortex to prepare the fourth liquid of step S140. Thereafter, similar to steps S120 and S130, steps S150 and S160 were performed to additionally form a pigmentary layer around each of the first color material particles. A tannic acid aqueous solution similar to the second liquid was used as the fifth liquid, and pure water similar to the third liquid was used as the sixth liquid. After step S160, the steps similar to step S140 to step S160 were executed again to additionally form a pigmentary layer, and the total number of times of the pigmentary layer formation was set to 3. In the sample 1-2, the pH of the mixed liquid was adjusted to 8.0 in step S150 and the step similar to step S150, which was executed again after step S160, similar to after completion of step S120. In the sample 1-1, the sample 1-2, and the sample 1-7, after completion of the third pigmentary layer formation, the obtained color material particles were suspended in 5.0 ml of water, the color of the color material particles in the suspension was visually observed, and the observed color was defined as the "color in suspension state" shown in FIGS. 2 and 3. The pH of the suspension was measured, and the measured pH was defined as the "pH after washing" shown in FIGS. 2 and 3.

The sample 1-3 and the sample 1-4 were prepared by mixing an iron (III) chloride hexahydrate aqueous solution with the second liquid. Specifically, 0.05 ml of the iron (III) chloride hexahydrate aqueous solution in which a concentration of iron (III) chloride hexahydrate was 40 g/L and 0.6 ml of the second liquid in which a concentration of tannic acid was 13 g/L were added into 25 ml of pure water, and mixed by stirring using a stirrer to thereby obtain an iron tannate liquid as the color material. The Fe molar concentrations and the TA molar concentrations of the sample 1-3 and the sample 1-4 shown in FIG. 2 represent the molar concentrations in the iron tannate liquid. In the preparation of the sample 1-4, after the preparation of the mixed liquid was completed, 0.2 mL of a sodium hydroxide aqueous solution having a concentration of 1 mol/L was added to the mixed liquid to thereby adjust the pH of the iron tannate liquid to 8.0. In the sample 1-3, the color of the iron tannate liquid was visually observed, and the observed color was defined as the "color in suspension state" shown in FIG. 2. In the sample 1-4, the color of the iron tannate liquid after pH adjustment was visually observed, and the observed color was defined as the "color in suspension state" shown in FIG. 2.

As the sample 1-5, a silica aqueous suspension having a density of 1.125 g/$cm^3$ and containing 20.5 mass% of silica particles each having a particle diameter of 268.3 nm was used. As the sample 1-6, a silica aqueous suspension having a density of 1.171 g/$cm^3$ and containing 26.8 mass% of silica particles each having a particle diameter of 322.4 nm was used. In the sample 1-5 and the sample 1-6, the color of the silica particles in the silica aqueous suspension was visually observed, and the observed color was defined as the "color in suspension state" shown in FIGS. 2and 3.

The average particle diameter of the color material particles contained in the sample 1-1, the sample 1-7, and the sample 1-8 was calculated by the same method as that for the average particle diameter of the core portions. By subtracting the particle diameter of the core portions from the measured average particle diameter of the color material particles, the thickness of the pigmentary layer formed around the core portion can be calculated.

Suspensions each obtained by suspending the sample 1-1 to the sample 1-15 in pure water were applied onto supports, respectively, and dried to thereby obtain coated products of the sample 1-1 to the sample 1-15. In the production of the coated product, a plurality of coated products having different applied thicknesses were prepared by adjusting the amount of the color material applied. In the sample 1-1 to the sample 1-4, a white porous plate manufactured by Nikkato Corporation was used as the support. In the sample 5 to the sample 1-15, a transparent slide glass manufactured by Matsunami Glass Ind., Ltd. was used as the support. The color of each sample in the application state was visually observed.

The applied thicknesses of the sample 1-1 and the sample 1-2 were calculated using cross-sectional scanning electron microscope (SEM) images of the coated products, respectively. Specifically, four cross-sectional SEM images were observed for each coated product, a thickness of a portion excluding the support was measured at 2 points for each SEM image, and an average value of thicknesses measured at 8 points was calculated to thereby calculate the applied thickness of the coated product.

The reflectance spectrum of the sample 1-1 to the sample 1-4 in the application state was measured using a USB 2000 Miniature Fiber Optic Spectrometer, which is a small fiber optical spectrometer, manufactured by Ocean Optics, Inc. Specifically, the sample was irradiated with white light such that an incident angle thereof was perpendicular to the sample, and a relative reflectance spectrum was measured. As a reference sample for the relative reflectance spectrum measurement, a standard white plate of PTFE was used. As a white light source, a halogen lamp was used.

The average particle diameter of the color material particles of the sample 1-1 was 286.7 nm. The average particle diameter of the color material particles of the sample 1-7 was 373.6 nm. The average particle diameter of the color material particles of the sample 1-8 was 338.6 nm. It is considered that in the sample 1-1, the sample 1-7, and the sample 1-8, iron tannate was adsorbed around the silica particles serving as the core particles, so that the pigmentary layer containing iron tannate was formed around the core portion, and the color material particles having an average particle diameter larger than the average particle diameter of the core portions were formed. The average particle diameters of the color material particles of the sample 1-7 and the sample 1-8 were larger than the average particle diameter of the color material particles of the sample 1-1, respectively. It is considered that the average particle diameters of the core portions of the sample 1-7 and the sample 1-8 were larger than the average particle diameter of the core portions of the sample 1-1, so that the average particle diameters of the color material particles of the sample 1-7 and the sample 1 -8 were larger than the average particle diameter of the color material particles of the sample 1-1.

Further, the average particle diameter of the color material particles of the sample 1-7 was larger than the average particle diameter of the color material particles of the sample 1-8. It is considered that since the number of times of the pigmentary layer formation of the sample 1-8 was 1, and the number of times of the pigmentary layer formation of the sample 1-7 was 3, the pigmentary layer was formed thicker in the sample 1 -7 than in the sample 1 -8. Thus, the thickness of the pigmentary layer of the paint color material can be adjusted by adjusting the number of times of the pigmentary layer formation. The particle diameter of the color material particles can be adjusted by adjusting the thickness of the pigmentary layer.

As shown in FIG. 2, the sample 1-1 and the sample 1-7 to the sample 1-12, in which the pH after washing was less than 7.0, that is, the liquid property of the liquid portion of the color material was acidic, had a bluish purple color in the suspension state. The sample 1-3, in which the liquid property of the iron tannate liquid was acidic, also had a bluish purple color in the suspension state. On the other hand, in the sample 1-2 and the sample 1-13 to the sample 1-15, in which the pH after washing was 7.0 or more, that is, the liquid property of the liquid portion of the color material was neutral or basic, the color developed by the pigmentary layer was a strong reddish color such as a reddish brown color or a reddish purple color. The sample 1-4, in which the liquid property of the iron tannate liquid was basic, also had a reddish brown color with strong redness in the suspension state. The sample 1-5 and the sample 1-6 had a white color in the suspension state. It is considered that, in the sample 1-1, the sample 1-2, and the sample 1-7 to the sample 1-15, the color developed by the iron tannate in the pigmentary layer was observed in the suspension state, depending on the liquid property of the liquid portion. It is considered that since the sample 1-5 and the sample 1-6 included no pigmentary layer, they did not develop the color by the pigmentary layer in the suspension state.

The sample 1-1, the sample 1-2, the sample 1-9, the sample 1-10, the sample 1-13, and the sample 1-14, in which the particle diameter of the core portions was 268.3 nm, had a stronger greenish color in the application state than in the suspension state. In these samples, the more the amount of the color material applied, the stronger the greenish color in the application state. On the other hand, the sample 1-7, the sample 1-8, the sample 1-11, the sample 1-12, and the sample 1-15, in which the particle diameter of the core portions was 322.4 nm, had a stronger reddish color in the application state than in the suspension state. In these samples, the more the amount of the color material applied, the stronger the reddish color in the application state. The sample 1-5 and the sample 1-6 developed a green color and a red color, respectively, in the application state. The sample 1-3 and the sample 1-4 developed a bluish purple color and a reddish brown color in the application state, respectively, similar to that in the suspension state.

It is considered that in the sample 1-1, the sample 1-2, and the sample 1-7 to the sample 1-15, the color material particles were arranged with a period in the application state, so that the structural color was developed in addition to the pigmentary color developed by the pigmentary layer. It is considered that, in these samples, the more the amount of the color material applied, the larger the applied thickness, the more the portion where the particles were arranged with a period in the thickness direction, and the stronger the structural color relatively with respect to the pigmentary color. It is considered that since the sample 1-5 and the sample 1-6 include no pigmentary layer, they only developed the structural color. It is considered that since the sample 1-3 and the sample 1-4 include no color material particles, they did not develop any structural color in the application state, and developed the same color as that in the suspension state.

As described above, the particle diameter of the color material particles contained in the sample 1-7 and the sample 1-8 was larger than the particle diameter of the color material particles contained in the sample 1-1. Further, since a difference between the method for preparing the sample 1-1 and the method for preparing the sample 1-2 is only the presence or absence of pH adjustment, the average particle diameter of the color material particles of the sample 1-2 is considered to be about the same as the average particle diameter of the color material particles of the sample 1-1. Therefore, it is considered that the sample 1-7 and the sample 1-8 developed a red structural color having a wavelength longer than that of the structural colors of the sample 1-1 and the sample 1-2, corresponding to the particle diameter of the color material particles. Similarly, it is considered that, since in other samples including a core portion having a particle diameter of 322.4 nm, the particle diameter of the color material particles is larger than that of the sample including a core portion having a particle diameter of 268.3 nm, a red structural color was developed. Accordingly, in the paint color material, for example, a relationship between the wavelength of the structural color and the particle diameter of the color material particle is examined in advance by experiments, and the particle diameter of the color material particle is adjusted such that a desired structural color is developed, whereby a desired structural color can be developed.

The sample 1-5 and the sample 1-6 had a stronger whitish color in the application state than the sample 1-1, the sample 1-2, and the sample 1- 7 to the sample 1-15 in the application state. It is considered that, in the sample 1-5 and the sample 1-6, only the silica particles including no pigmentary layer were contained, so that the reflected light of the structural color of the sample 1-5 and the sample 1-6 in the application state was multiple-scattered, and there was no color developed by the pigmentary layer, and thus a strong whitish color was observed. On the other hand, it is considered that since the sample 1-1, the sample 1-2, and the sample 1-7 to the sample 1-15 each include the pigmentary layer, multiple scattering of the reflected light of the structural color of these samples in the application state was prevented, and the color developed by the reflected light of the pigmentary color and the reflected light of the structural color, which is stronger than that of the sample 1-5 and the sample 1-6, was observed.

FIG. 4 is a diagram showing a reflectance spectrum of the sample 1-1 and the sample 1-3 in the application state. In the sample 1-1, green reflected light was observed at a position in the vicinity of a wavelength of 555 nm at each applied thickness. In the sample 1-1 and the sample 1-3, reflected light of a red or reddish brown pigmentary color was observed at a position of a wavelength of 700 nm to 750 nm. In the sample 1-1, the intensity of the red or reddish brown reflected light in the vicinity of the wavelength of 700 nm to 750 nm was weaker than that in the sample 1-3.

FIG. 5 is a diagram showing a reflectance spectrum of the sample 1-2 and the sample 1-4 in the application state. In the sample 1-2, green reflected light was observed at a position in the vicinity of a wavelength of 555 nm at each applied thickness. In the sample 1-2 and the sample 1-4, reflected light of a blue pigmentary color was observed in the vicinity of a wavelength of 480 nm, and reflected light of a red or reddish brown pigmentary color was observed at a position of a wavelength of 700 nm to 750 nm. In the sample 1-2, the intensity of the blue reflected light in the vicinity of a wavelength of 480 nm, and the intensity of the red or reddish brown reflected light in the vicinity of a wavelength of 700 nm to 750 nm were weaker than those in the sample 1-4.

As shown in FIGS. 4 and 5, in the sample 1-1 and the sample 1-2, the larger the applied thickness, the stronger the intensity of the reflected light of the structural color relatively with respect to the intensity of the reflected light of the pigmentary color. In the sample 1-1 and the sample 1-2, the larger the applied thickness, the stronger the greenish color in the application state, as confirmed visually. It is considered that, in the sample 1-1 and the sample 1-2, the larger the applied thickness, the more the portion where the particles were arranged with a period in the thickness direction, and the stronger the structural color relatively with respect to the pigmentary color.

As shown in FIG. 3, the sample 1-17 to the sample 1-23 had a bluish purple color in the suspension state. The sample 1-24 had a reddish purple color in the suspension state. It is considered that these samples developed the pigmentary color by the pigmentary layer formed around the core portion in the suspension state, similar to the sample 1-1, the sample 1-2, and the sample 1-7 to the sample 1-15 shown in FIG. 2.

The sample 1-16 had a white color in the suspension state. It is considered that, in the preparation of the sample 1-16, since $Fe/SiO_2$ and $TA/SiO_2$ in the first mixed solution were smaller than those in the other samples, the pigmentary layer was hardly formed around the each of silica particles serving as the core particles. As shown in FIG. 3, in order to effectively form the pigmentary layer around each of the core particles, it is preferred that $Fe/SiO_2$ is $5.41 \times 10^{-4}$ or more, and $TA/SiO_2$ is $3.61 \times 10^{-4}$ or more

As described above, the method for preparing sample 1-13 and the method for preparing sample 1-24 are the same in that the pH is adjusted with a buffer, but the timing of pH adjustment is different. The sample 1-24 had a reddish purple color in the suspension state after washing, but the pigmentary layer gradually peeled off from the core portion over time, and after 7 days, the color of the color material turned a white color. The sample 1-13 had a reddish purple color in the suspension state after washing similar to the sample 1-24, and the color of the color material remained the reddish purple color even after 7 days. Therefore, in the event of adjusting the pH in the production of the paint color material, it is preferred to adjust the pH of the first mixed solution prior to the second step in order to enhance the storage stability of the paint color material.

According to the experimental results described above, it is confirmed that the paint color material including the particles that each include the core portion and the pigmentary layer being formed around the core portion and containing iron tannate develops a novel color by the pigmentary layer and the structural color.

D. Experimental results according to the second embodiment: Various color materials were prepared for experiments. The prepared color material was applied onto a support to prepare a coated product as a sample, and a reflectance spectrum of the prepared coated product was measured to verify the effect of the embodiment described above.

Five kinds of color materials A to E were prepared as the color materials. The color material A to the color material C were prepared according to the production method shown in FIG. 6, and further, a pigmentary layer was additionally formed according to the method shown in FIG. 7. The color material D and the color material E were prepared by a method to be described later. A silica particle aqueous suspension manufactured by Fuji Chemical Industries Co., Ltd. was used as a silica particle aqueous suspension that is a raw material for silica particles of the core portion. Specifically, in the preparation of the color material A and the color material B, a silica particle aqueous suspension containing 26.3 mass% of silica particles having an average particle diameter of 268.3 nm was used, and in the preparation of the color material C, a silica particle aqueous suspension containing 26.8 mass% of silica particles having an average particle diameter of 322.4 nm was used. The average particle diameter of the silica particles was calculated based on measurement results of a particle size distribution by a dynamic light scattering method. Specifically, a median diameter (D50) of the silica particles calculated based on the measurement results by the dynamic light scattering method was used as the average particle diameter. The density of each silica particle aqueous suspension is 2.2 g/cm$^3$. The average particle diameter of the silica particles contained in the silica particle aqueous suspension used to prepare each color material was used as the average particle diameter of the core portion of each color material. As a raw material of tannic acid, tannic acid (molecular weight: 1701.19) manufactured by Kishida Chemical Co., Ltd. was used.

In the preparation of the color material A, first, 0.05 mL of an iron (III) chloride hexahydrate aqueous solution in which a concentration of iron (III) chloride hexahydrate was 40 g/L and 0.55 mL of a silica particle aqueous suspension were mixed using a vortex to prepare the liquid a of step S2110. Prior to the preparation of the liquid a, the silica particle aqueous suspension was irradiated with ultrasonic waves for 90 minutes to improve the dispersibility of silica microparticles in the silica particle aqueous suspension. As the liquid b, 0.6 mL of a tannic acid aqueous solution in which a concentration of tannic acid was 13 g/L was prepared. Next, in step S2120, using a syringe, 1 drop (about 0.03 mL) of the liquid a and 1 drop (about 0.03 mL) of the liquid b were alternately added in a total of 0.6 mL of each liquid into 25 mL of pure water, and mixed by stirring using a stirrer to prepare the mixed liquid of the liquid a and the liquid b, thereby obtaining the color material particles. After completion of step S2120, the pH of the mixed liquid was adjusted to 8.0 by adding 0.2 mL of a 1 mol/L sodium hydroxide aqueous solution to the mixed liquid. Thereafter, in step S2130, first, the mixed liquid was centrifuged, and the supernatant generated by the centrifugation was discarded to obtain a residue containing the color material particles. Next, the color material particles were washed by repeating an operation of mixing the residue with pure water by a vortex, further centrifuging the suspension obtained by mixing, and discarding the supernatant generated by centrifugation.

Further, a 0.55 mL suspension was prepared by suspending the color material particles obtained in step S2130 in water, and the prepared color material suspension and an iron (III) chloride hexahydrate aqueous solution similar to that in step S2110 were mixed using a vortex to prepare the liquid c in step S2210 shown in FIG. 7. Thereafter, similar to steps S2120 and S2130, steps S2220 and S2230 were performed to additionally form a pigmentary layer around each of the color material particles. For the color material A, after completion of step S2220 in the step of additionally forming the pigmentary layer, the pH of the mixed liquid was adjusted in the same manner as after completion of step S2120. The additional formation of the pigmentary layer was performed twice in total.

In the preparation of the color material B, the same procedure as that for the color material A was performed, except that the pH adjustment was not performed after completion of step S2120 and after completion of step S2220. In the preparation of the color material B, the pH after completion of step S2120 and after completion of step S2220 was 5.0. In the preparation of the color material C, in step S2110, 0.05 mL of an iron (III) chloride hexahydrate aqueous solution in which a concentration of iron (III) chloride hexahydrate was 40 g/L and 0.55 mL of a silica particle aqueous suspension were mixed using a vortex to prepare the liquid a. In step S2210, a 0.55 mL suspension was prepared by suspending the color material obtained in step S2130 in water, and the prepared suspension of the color material and an iron (III) chloride hexahydrate aqueous solution similar to that in step S2110 were mixed using a vortex to prepare the liquid c. In the preparation of the color material C, similar to the preparation of the color material B, pH adjustment was not performed after the completion of step S2120 and after completion of step S2220. In the preparation of the color material C, similar to the preparation of the color material B, the pH after completion of step S2120 and after completion of step S2220 was 5.0. In the preparation of the color material C, the same procedure as that in the preparation of the color material B were performed for portions not specifically described.

The color material D and the color material E were prepared by mixing an iron (III) chloride hexahydrate aqueous solution and the liquid b. Specifically, 0.05 ml of an iron (III) chloride hexahydrate aqueous solution in which a concentration of iron (III) chloride hexahydrate was 40 g/L and 0.6 ml of the second liquid in which a concentration of tannic acid was 13 g/L were added into 25 ml of pure water, and mixed by stirring using a stirrer to obtain the color material. In the preparation of the color material D, after the completion of the adjustment of the mixed liquid was completed, 0.2 mL of a 1 mol/L sodium hydroxide aqueous solution was added into the mixed liquid to adjust the pH of the mixed liquid to 8.0. In the preparation of the color material E, the pH adjustment of the mixed liquid was not performed, and the pH of the mixed liquid after the adjustment of the mixed liquid was 5.0. In the production of the color material D and the production of the color material E, no washing step was performed.

The average particle diameter of the color material particles contained in the color material B and the color material C was calculated by the same method as that for the average particle diameter of the core portions. By subtracting the particle diameter of the core portions from the measured average particle diameter of the color material particles, the thickness of the pigmentary layer formed around the core portion can be calculated.

FIG. 9 is a diagram showing coated products as the samples prepared in the experiments according to the second embodiment. FIG. 9 shows the type of the color material and the type of the support used in the preparation of each sample, and the color developed by the pigmentary layer and the structural color in each sample. Each sample shown in FIG. 9 was prepared by applying the color material onto the support and then drying the color material according to the method for producing a coated product shown in FIG. 8. As shown in FIG. 9, in the sample 2-1 to the sample 2-3, the sample 2-6, and the sample 2-7, a white porous plate manufactured by Nikkato Corporation was used as the support. In the sample 2-4, a transparent glass plate, specifically, a transparent slide glass manufactured by Matsunami Glass Ind., Ltd. was used as the support. In the sample 2-5, white drawing paper, specifically, white Montval Canson paper manufactured by Canson was used as the support. In the preparation of each sample, a plurality of coated products having different applied thicknesses were prepared for each sample by adjusting the amount of the color material applied.

The reflectance spectrum of the coated product was measured using a USB 2000 Miniature Fiber Optic Spectrometer, which is a small fiber optical spectrometer, manufactured by Ocean Optics, Inc. Specifically, the sample was irradiated with white light such that an incident angle thereof was perpendicular to the sample, and a relative reflectance spectrum was measured. A PTFE standard white plate WS-1 manufactured by Ocean Photonics was used as a reference sample in the relative reflectance spectrum measurement. As a white light source, a halogen lamp was used. In the sample 2-4 using the transparent glass as the support, the measurement was performed by placing the sample on white drawing paper. A reflected light intensity ratio was calculated based on the measured reflectance spectrum. The reflected light intensity ratio is a ratio of the reflected light intensity of the structural color to the reflected light intensity of the color developed by the pigmentary layer.

The applied thickness of the coated product was calculated using a cross-sectional scanning electron microscope (SEM) image of the coated product. Specifically, four cross-sectional SEM images were observed for each coated product, a thickness of a portion excluding the support was measured at 2 points for each SEM image, and an average value of thicknesses measured at 8 points was calculated to thereby calculate the applied thickness of the coated product.

The average particle diameter of the color material particles of the color material B was 286.7 nm, and the average particle diameter of the color material particles of the color material C was 373.6 nm. It is considered that, in the color material B and the color material C, iron tannate was adsorbed to the silica particles as the core portions, so that the pigmentary layer containing iron tannate was formed around each of the core portions, and color material particles having an average particle diameter larger than the average particle diameter of the core portions were formed. The average particle diameter of the color material particles of the color material C was larger than the average particle diameter of the color material particles of the color material B. It is considered that the number of times of pigmentary layer additional formation is the same for the color material C and the color material B, so that the average particle diameter of the color material particles of the color material C is larger than the average particle diameter of the color material particles of the color material B due to the average particle diameter of the core portions.

As shown in FIG. 9, the sample 2-1 to the sample 2-5 developed the color by the pigmentary layer and structural color corresponding to the particle diameter of the color material particles. Specifically, the sample 2-1, the sample 2-4, and the sample 2-5 each using the color material A developed a color by a reddish brown color of the pigmentary layer and a green color of the structural color. The sample 2-2 using the color material B developed a color by a bluish purple color of the pigmentary layer and a green color of the structural color. The sample 2-3 using the color material C developed a color by a bluish purple color of the pigmentary layer and a red color of the structural color. The sample 2-6 using the color material D developed a reddish brown color of the pigmentary layer and no structural color. The sample 2-7 using the color material E developed a bluish purple color of the pigmentary layer and no structural color. It is considered that since the color material D and the color material E include no core portion, the sample 2-6 and the sample 2-7 did not develop the structural color.

The sample 2-3 using the color material C and the sample using the color material A or the color material B had different structural color hues. As described above, the particle diameter of each of the color material particles contained in the color material C was larger than the particle diameter of each of the color material particles contained in the color material B. As described above, since the difference between the method for preparing the color material A and the method for preparing the color material B is only the presence or absence of pH adjustment, the average particle diameter of the color material particles of the color material A is considered to be about the same as the average particle diameter of the color material particles of the color material B. Therefore, it is considered that the sample 2-3 developed a red structural color having a wavelength longer than that of the samples using the color material A and the color material B, corresponding to the particle diameter of each of the color material particles. Accordingly, in the paint color material, for example, a relationship between the wavelength of the structural color and the particle diameter of the color material particle is examined in advance by experiments, and the particle diameter of the color material particle is adjusted such that a desired structural color is developed, whereby a desired structural color can be developed.

FIG. 10 is a diagram showing a reflectance spectrum of the sample 2-1 and the sample 2-6. In the sample 2-1, reflected light of a green structural color was observed at each applied thickness. Specifically, the reflected light of the structural color was observed at a position of a wavelength of 555.04 nm in the case of the applied thickness of 5.17 $\mu$m, the applied thickness of 28.54 $\mu$m, and the applied thickness of 48.59 $\mu$m, and at a position of a wavelength of 543.45 nm in the case of the applied thickness of 144.67 $\mu$m. In the sample 2-1 and the sample 2-6, red or reddish brown light reflected by the pigmentary layer was observed at a position of a wavelength of 700 nm to 750 nm.

FIG. 11 is a diagram showing a relationship between the applied thickness and the reflected light intensity ratio in the sample 2-1. The reflected light intensity ratio shown in FIG. 11 was calculated as a ratio of the reflected light intensity of the structural color at the above-mentioned wavelength for each applied thickness to the reflected light intensity at a position of the wavelength of 700 nm. As shown in FIG. 11, in the sample 2-1, the larger the applied thickness, the larger the reflected light intensity ratio. When the sample 2-1 was visually observed, the larger the applied thickness, the stronger the greenness. It is considered that, in the sample 2-1, the larger the applied thickness, the more the portion where the particles are arranged with periodicity in the thickness direction, and the stronger the reflected light of the structural color with respect to the reflected light of the color developed by the pigmentary layer.

FIG. 12 is a diagram showing a reflectance spectrum of the sample 2-4. In the sample 2-4, reflected light of a green structural color was observed at each applied thickness, similar to the sample 2-1. Specifically, the reflected light of the structural color was observed at a position of a wavelength of 553.5 nm in the case of the applied thickness of 4.70 μm, at a position of a wavelength of 567.4 nm in the case of the applied thickness of 17.00 μm, at a position of a wavelength of 551.18 nm in the case of the applied thickness of 23.60 μm, at a position of a wavelength of 538 .03 nm in the case of the applied thickness of 180.00 μm, and at a position of a wavelength of 526.41 nm in the case of the applied thickness of 326.00 μm. In the sample 2-4, similar to the sample 2-1, red or reddish brown light reflected by the pigmentary layer was observed at a wavelength of 700 nm to 750 nm.

FIG. 13 is a diagram showing a relationship between the applied thickness and the reflected light intensity ratio in the sample 2-4. The reflected light intensity ratio in FIG. 13 was calculated in the same manner as the reflected light intensity ratio in the sample 2-1 shown in FIG. 11. As shown in FIG. 13, in the sample 2-4, similar to the sample 2-1, the larger the applied thickness, the larger the reflected light intensity ratio. When the sample 2-4 was visually observed, similar to the sample 2-1, the larger the applied thickness, the stronger the greenness. It is considered that, in the sample 2-4, similar to the sample 2-1, the larger the applied thickness, the more the portion where the particles were arranged with periodicity in the thickness direction, and the stronger the reflected light of the structural color with respect to the reflected light of the color developed by the pigmentary layer.

FIG. 14 is a diagram showing a reflectance spectrum of the sample 2-5. In the sample 2-5, reflected light of a green structural color was observed at each applied thickness, similar to the sample 2-1 and the sample 2-4. Specifically, the reflected light of the structural color was observed at a position of a wavelength of 545.77 nm in the case of the applied thickness of 45.11 μm, at a position of a wavelength of 543.45 nm in the case of the applied thickness of 78.59 μm, and at a position of a wavelength of 531.80 nm in the case of the applied thickness of 122.44 μm. In the sample 2-5, similar to the sample 2-1 and the sample 2-4, red or reddish brown light reflected by the pigmentary layer was observed at a wavelength of 700 nm to 750 nm.

FIG. 15 is a diagram showing a relationship between the applied thickness and the reflected light intensity ratio in the sample 2-5. The reflected light intensity ratio in FIG. 15 was calculated in the same manner as the reflected light intensity ratio in the sample 2-1 shown in FIG. 11 and the sample 2-4 shown in FIG. 13. As shown in FIG. 15, in the sample 2-5, similar to the sample 2-1 and the sample 2-4, the larger the applied thickness, the larger the reflected light intensity ratio. When the sample 2-5 was visually observed, similar to the sample 2-1 and the sample 2-4, the larger the applied thickness, the stronger the greenness. Therefore, it is considered that, in the sample 2-5, similar to the sample 2-1 and the sample 2-4, the larger the applied thickness, the more the portion where the particles were arranged with periodicity in the thickness direction, and the stronger the reflected light of the structural color with respect to the reflected light of the color developed by the pigmentary layer.

In the sample 2-1 shown in FIGS. 10 and 11, the reflected light intensity ratio is small, and the degree of increase in the reflected light intensity ratio with respect to the increase in the applied thickness is small, as compared with the sample 2-4 shown in FIGS. 12 and 13. The support of the sample 2-1 is a porous plate, which has a higher water absorbing property than that of a glass plate, i.e., the support of the sample 2-4. Accordingly, in the process of drying the paint onto the support during the preparation of the sample 2-1, the liquid component contained in the paint is likely to be absorbed by the support. Therefore, it is considered that, as compared with the case where the glass plate or the like having a water absorbing property lower than that of the porous plate is used as the support, the arrangement of the color material particles was disturbed due to the diffusion caused by the absorption of the liquid component into the support, and the particles were hardly arranged with periodicity. On the other hand, in the sample 2-4, since the liquid component contained in the paint was not easily absorbed by the support in the process of drying the paint onto the support, the particles were likely to be arranged with periodicity.

In the sample 2-5 shown in FIGS. 14 and 15, the reflected light intensity ratio is large, and the degree of increase in the reflected light intensity ratio with respect to the increase in the applied thickness is large, as compared with the sample 2-1 shown in FIGS. 10 and 11. The reflected light intensity ratio is small, and the degree of increase in the reflected light intensity ratio with respect to the increase in the applied thickness is small, as compared with the sample 2-4 shown in FIGS. 12 and 13. The support of the sample 2-5 is drawing paper, which has a higher water absorbing property than that of the glass plate and a lower water absorbing property than that of the porous plate. Therefore, it is considered that in the sample 2-5, in the process of drying the paint onto the support, the particles were easily arranged with periodicity as compared with the sample 2-1, and the particles were hardly arranged with periodicity as compared with the sample 2-4.

By referring to the experimental results as shown in FIG. 11, FIG. 13, and FIG. 15, the color developed in the case where the paint containing the paint color material is applied onto the support or the like can be freely adjusted depending on the applied thickness of the paint color material. For example, when referring to the experimental results shown in FIG. 11, the relationship between the applied thickness and the reflected light intensity ratio shown in FIG. 11 and the relationship between the reflected light intensity ratio and the color are examined, and the paint color material is applied onto the support so as to have the applied thickness, whereby the paint color material can develop a color in an intended hue or the like. The relationship between the reflected light intensity ratio and the color may be examined, for example, by visually confirming the color at a certain reflected light intensity ratio, or an L* value, an a* value, or a b* value in a color space such as an L*a*b* color system may be calculated based on the reflectance spectrum, and the relationship between these values and the reflected light intensity ratio may be examined. In this case, for example, the experimental results in FIG. 11, changes in values in the L*a*b* color space, and the like may be analyzed and fitted by a function, and the applied thickness for implementing a specific color may be examined based on the fitted function. For example, the relationship between the applied thickness and the color may be examined. Further, by referring to the experimental results in the case of preparing the paint color materials using the supports having different water absorbing properties, respectively, as shown in FIGS. 11, 13, and 15, the relationship between the water absorbing property of the support and the color can be examined, and the color of the coated product can be adjusted depending on the water absorbing property of the support.

According to the experimental results described above, it is confirmed that the paint color material containing the particles that each include the core portion and the pigmentary layer being around the core portion and containing iron tannate develops a novel color that can be adjusted depending on the applied thickness.

The present disclosure is not limited to the above-described embodiments, and can be implemented by various configurations without departing from the gist of the present disclosure. For example, the technical features in the embodiments corresponding to the technical features in the aspects described in "Summary of Invention" can be appropriately replaced or combined in order to solve a part or all of the problems described above or in order to achieve a part or all of the effects described above. Any of the technical features may be omitted as appropriate unless the technical feature is described as essential herein.

The present application is based on a Japanese Patent Application 2020-178523 filed on October 26, 2020 and a Japanese Patent Application 2020-178525 filed on October 26, 2020, the contents of which are incorporated herein by reference.

## Claims

1. A paint color material comprising color material particles that each comprise a core portion and a pigmentary layer being formed around the core portion and containing an iron tannate, and that each have a particle diameter corresponding to a wavelength of a structural color,
wherein the paint color material develops a color by the pigmentary layer and the structural color.

2. The paint color material according to claim 1, further comprising a liquid portion, wherein the color is adjustable depending on a liquid property of the liquid portion.

3. The paint color material according to claim 1, wherein the paint color material is a paint color material to be applied onto a support, and the color is adjustable depending on an applied thickness.

4. The paint color material according to claim 3, wherein the color is adjustable depending on a water absorbing property of the support in addition to the applied thickness.

5. A method for producing a paint color material developing a color by a pigmentary color and a structural color, the method comprising:

   a first step of obtaining a mixed liquid containing a color material particles by alternately adding and mixing a liquid obtained by suspending core particles each having a uniform particle diameter in a solution containing Fe and a liquid containing tannic acid into a liquid containing water as a main component, the color material particles each comprising a core portion formed by the core particle and a pigmentary layer that is formed around the core portion and contains an iron tannate, and each having a particle diameter corresponding to a wavelength of the structural color; and
   a second step of washing the color material particles.

6. The production method according to claim 5, wherein in the mixed liquid, a ratio of the number of moles of the Fe to the number of moles of the core particles is $5.41 \times 10^{-4}$ or more, and a ratio of the number of moles of the tannic acid to the number of moles of the core particles is $3.61 \times 10^{-4}$ or more.

7. The production method according to claim 5 or 6, wherein a pH of the mixed liquid is adjusted to 7.0 or more prior to the second step.

8. The production method according to any one of claims 5 to 7, further comprising a third step of, after the second step, additionally forming a pigmentary layer around each of the color material particles by alternately adding and mixing a liquid obtained by suspending the color material particles in a solution containing Fe and a liquid containing tannic acid into a liquid containing water as a main component.

**9.** A method for producing a coated product, the method comprising:

a step of applying, onto a support, a paint containing particles that each comprise a core portion and a pigmentary layer being formed around the core portion and containing an iron tannate, and that each have a particle diameter corresponding to a wavelength of a structural color; and
a step of adjusting a thickness of the paint onto the support to adjust a color developed by the pigmentary layer and the structural color.

FIG.1

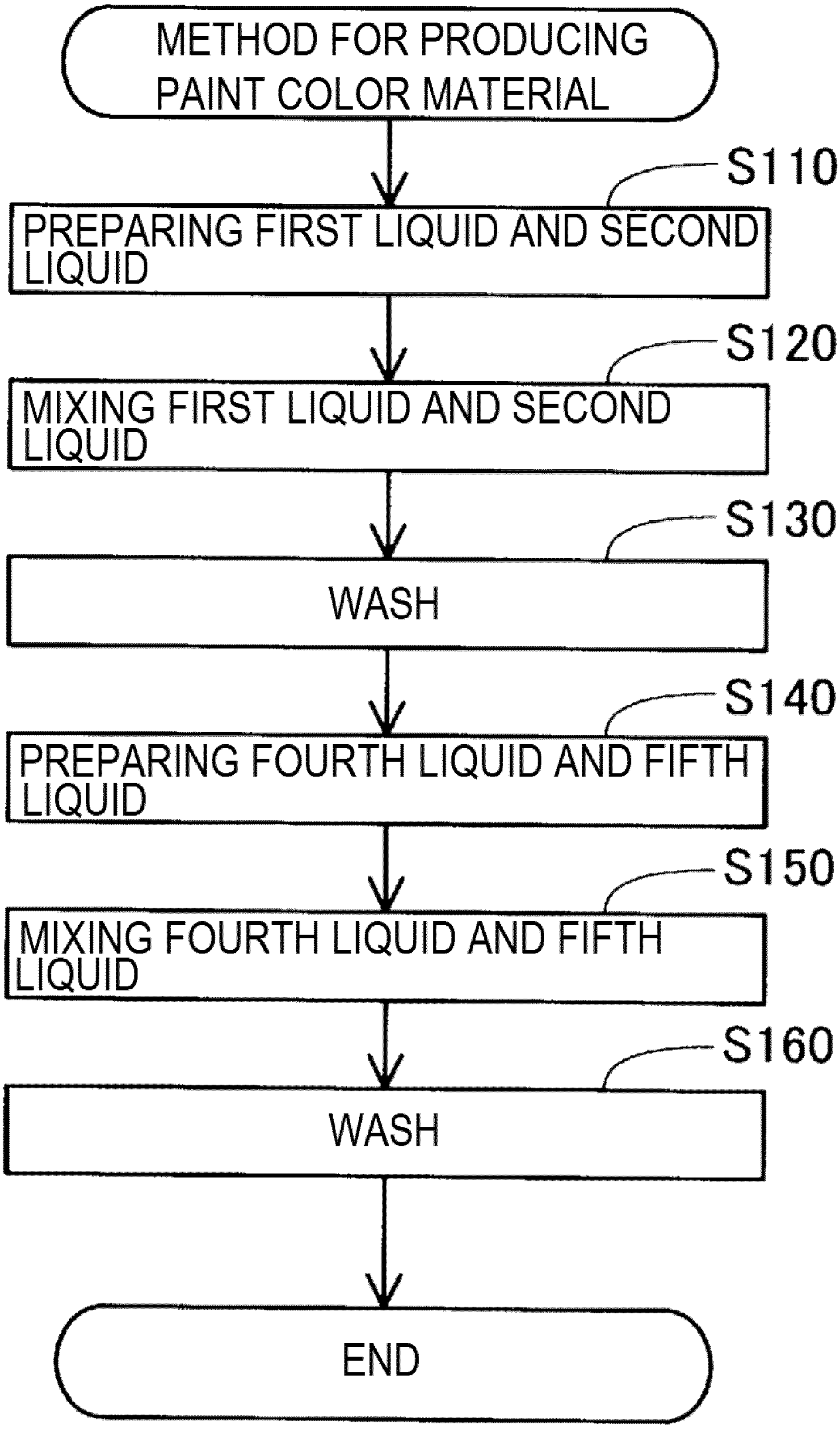
METHOD FOR PRODUCING PAINT COLOR MATERIAL
S110
PREPARING FIRST LIQUID AND SECOND LIQUID
S120
MIXING FIRST LIQUID AND SECOND LIQUID
S130
WASH
S140
PREPARING FOURTH LIQUID AND FIFTH LIQUID
S150
MIXING FOURTH LIQUID AND FIFTH LIQUID
S160
WASH
END

*FIG.2*

| SAMPLE | PARTICLE DIAMETER OF CORE PORTION (nm) | NUMBER OF TIMES OF PIGMENTARY LAYER FORMATION | pH ADJUSTMENT METHOD | $SiO_2$ MOLAR CONCENTRATION (mol/L) | Fe MOLAR CONCENTRATION (mmol/L) | TA MOLAR CONCENTRATION (mmol/L) | $Fe/SiO_2$ ($\times 10^{-4}$) | $TA/SiO_2$ ($\times 10^{-4}$) | pH AFTER WASH | COLOR IN SUSPENSION STATE | COLOR IN APPLICATION STATE |
|---|---|---|---|---|---|---|---|---|---|---|---|
| 1-1 | 268.3 | 3 | - | 0.109 | 0.287 | 0.178 | 26.31 | 16.30 | 5.1 | BLUISH PURPLE | GREEN |
| 1-2 | 268.3 | 3 | NaOH | 0.109 | 0.287 | 0.178 | 26.31 | 16.30 | 8.0 | REDDISH BROWN | GREEN |
| 1-3 | - | - | - | - | 0.288 | 0.179 | - | - | - | BLUISH PURPLE | - |
| 1-4 | - | - | - | - | 0.288 | 0.179 | - | - | - | REDDISH BROWN | - |
| 1-5 | 268.3 | - | - | - | - | - | - | - | - | WHITE | GREEN |
| 1-6 | 322.4 | - | - | - | - | - | - | - | - | WHITE | RED |
| 1-7 | 322.4 | 3 | - | 0.111 | 0.287 | 0.178 | 25.75 | 15.96 | 5.1 | BLUISH PURPLE | RED |
| 1-8 | 322.4 | 1 | - | 0.111 | 0.287 | 0.178 | 25.75 | 15.96 | 5.1 | BLUISH PURPLE | RED |
| 1-9 | 268.3 | 1 | - | 0.102 | 0.223 | 0.102 | 21.90 | 10.02 | 3.7 | BLUISH PURPLE | GREEN |
| 1-10 | 268.3 | 1 | - | 0.102 | 0.223 | 0.102 | 21.90 | 10.02 | 5.1 | BLUISH PURPLE | GREEN |
| 1-11 | 322.4 | 1 | - | 0.111 | 0.287 | 0.178 | 25.75 | 15.96 | 4.6 | BLUISH PURPLE | RED |
| 1-12 | 322.4 | 1 | - | 0.100 | 0.354 | 0.253 | 35.41 | 25.32 | 5.1 | BLUISH PURPLE | RED |
| 1-13 | 268.3 | 1 | BUFFER | 0.102 | 0.223 | 0.102 | 21.90 | 10.02 | 7.2 | REDDISH PURPLE | GREEN |
| 1-14 | 268.3 | 1 | NaOH | 0.102 | 0.223 | 0.102 | 21.90 | 10.02 | 8.0 | REDDISH BROWN | GREEN |
| 1-15 | 322.4 | 1 | NaOH | 0.138 | 0.222 | 0.102 | 16.10 | 7.37 | 8.1 | REDDISH PURPLE | RED |

FIG.3

| SAMPLE | PARTICLE DIAMETER OF CORE PORTION (nm) | NUMBER OF TIMES OF PIGMENTARY LAYER FORMATION | pH ADJUSTMENT METHOD | $SiO_2$ MOLAR CONCENTRATION (mol/L) | Fe MOLAR CONCENTRATION (mmol/L) | TA MOLAR CONCENTRATION (mmol/L) | $Fe/SiO_2$ ($\times 10^{-4}$) | $TA/SiO_2$ ($\times 10^{-4}$) | pH AFTER WASH | COLOR IN SUSPENSION STATE |
|---|---|---|---|---|---|---|---|---|---|---|
| 1-16 | 268.3 | 1 | - | 0.105 | 0.022 | 0.014 | 2.11 | 1.31 | 5.6 | WHITE |
| 1-17 | 268.3 | 1 | - | 0.106 | 0.057 | 0.038 | 5.41 | 3.61 | 6.5 | BLUISH PURPLE |
| 1-18 | 322.4 | 1 | - | 0.100 | 0.177 | 0.126 | 17.71 | 12.66 | 5.1 | BLUISH PURPLE |
| 1-19 | 322.4 | 1 | - | 0.100 | 0.177 | 0.253 | 17.71 | 25.32 | 5.1 | BLUISH PURPLE |
| 1-20 | 322.4 | 1 | - | 0.138 | 0.222 | 0.068 | 16.10 | 4.91 | 5.1 | BLUISH PURPLE |
| 1-21 | 322.4 | 1 | - | 0.138 | 0.222 | 0.102 | 16.10 | 7.37 | 5.1 | BLUISH PURPLE |
| 1-22 | 322.4 | 1 | - | 0.100 | 0.354 | 0.169 | 35.41 | 16.88 | 5.1 | BLUISH PURPLE |
| 1-23 | 322.4 | 1 | - | 0.135 | 0.444 | 0.169 | 32.19 | 12.28 | 5.1 | BLUISH PURPLE |
| 1-24 | 268.3 | 1 | BUFFER | 0.102 | 0.223 | 0.102 | 21.90 | 10.02 | 7.2 | REDDISH PURPLE |

*FIG.4*

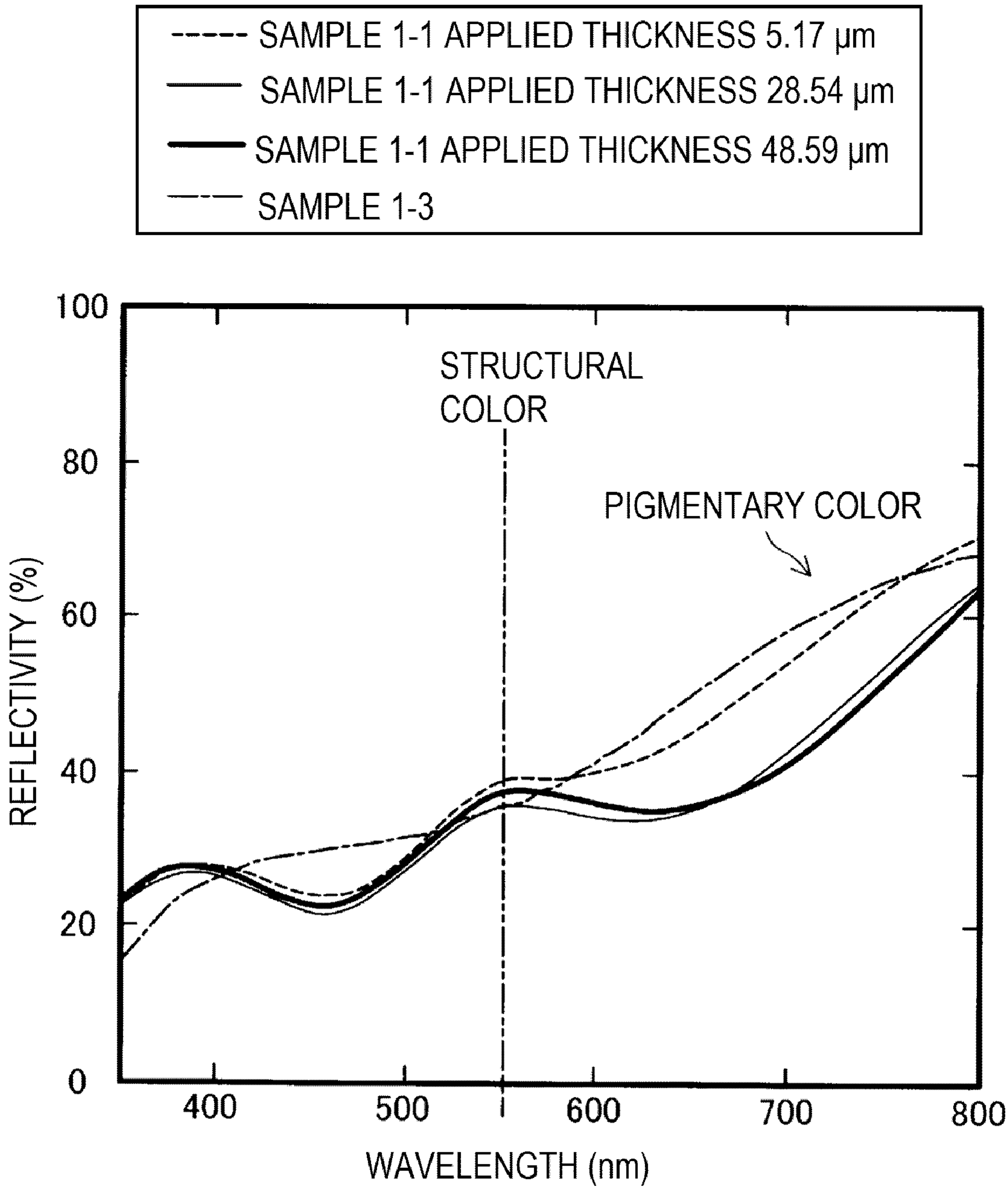
SAMPLE 1-1 APPLIED THICKNESS 5.17 μm
SAMPLE 1-1 APPLIED THICKNESS 28.54 μm
SAMPLE 1-1 APPLIED THICKNESS 48.59 μm
SAMPLE 1-3
100
80
60
40
20
0
REFLECTIVITY (%)
STRUCTURAL COLOR
PIGMENTARY COLOR
400
500
600
700
800
WAVELENGTH (nm)

FIG.5

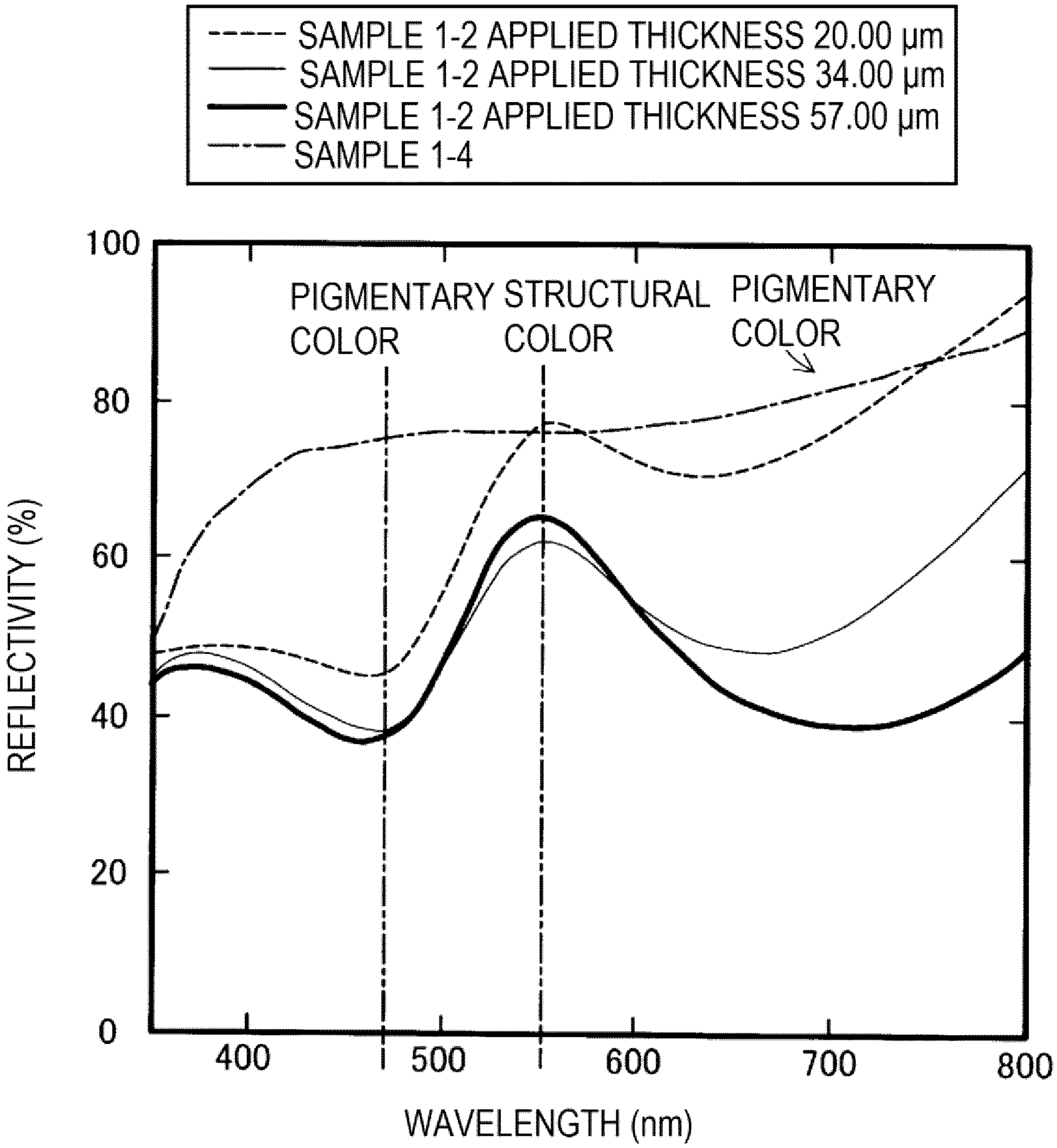
SAMPLE 1-2 APPLIED THICKNESS 20.00 µm
SAMPLE 1-2 APPLIED THICKNESS 34.00 µm
SAMPLE 1-2 APPLIED THICKNESS 57.00 µm
SAMPLE 1-4
PIGMENTARY COLOR
STRUCTURAL COLOR
PIGMENTARY COLOR
REFLECTIVITY (%)
100
80
60
40
20
0
400
500
600
700
800
WAVELENGTH (nm)

FIG.6

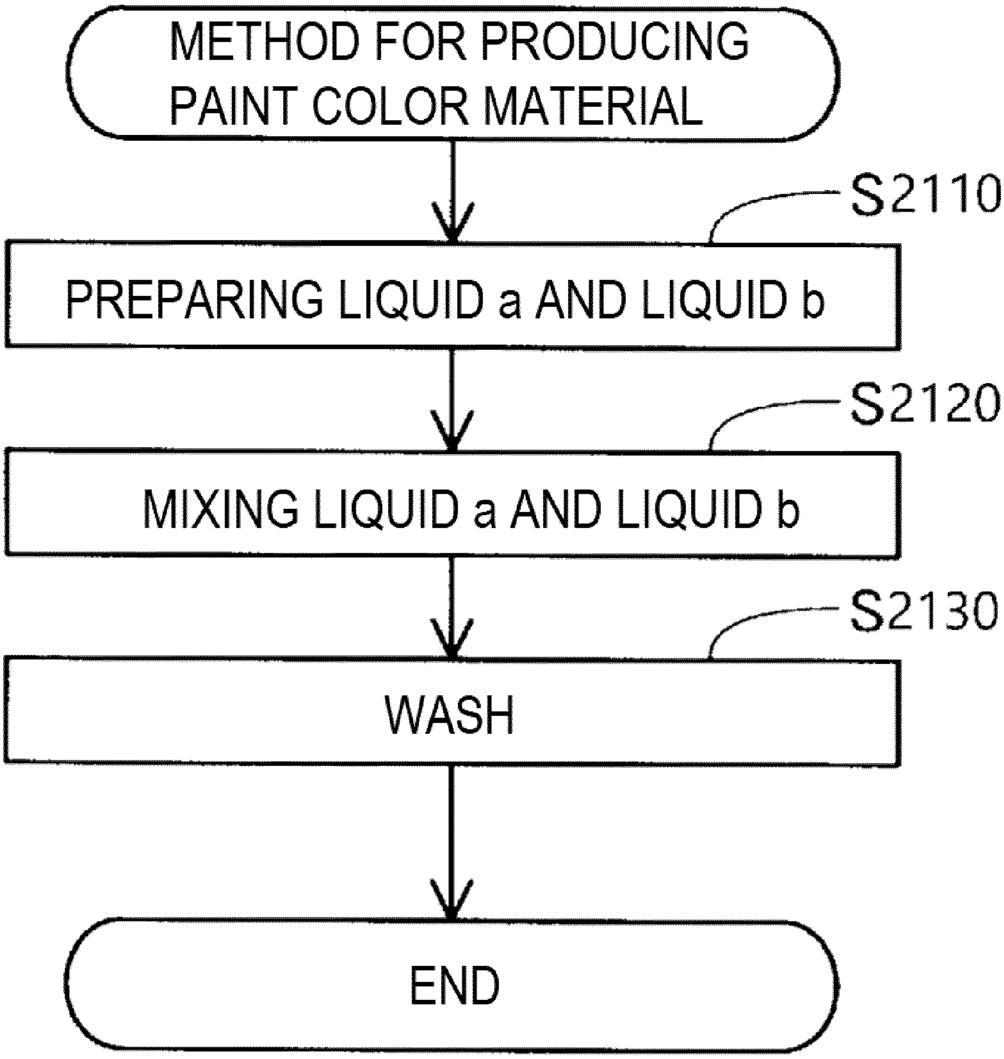
METHOD FOR PRODUCING PAINT COLOR MATERIAL
S2110
PREPARING LIQUID a AND LIQUID b
S2120
MIXING LIQUID a AND LIQUID b
S2130
WASH
END

FIG.7

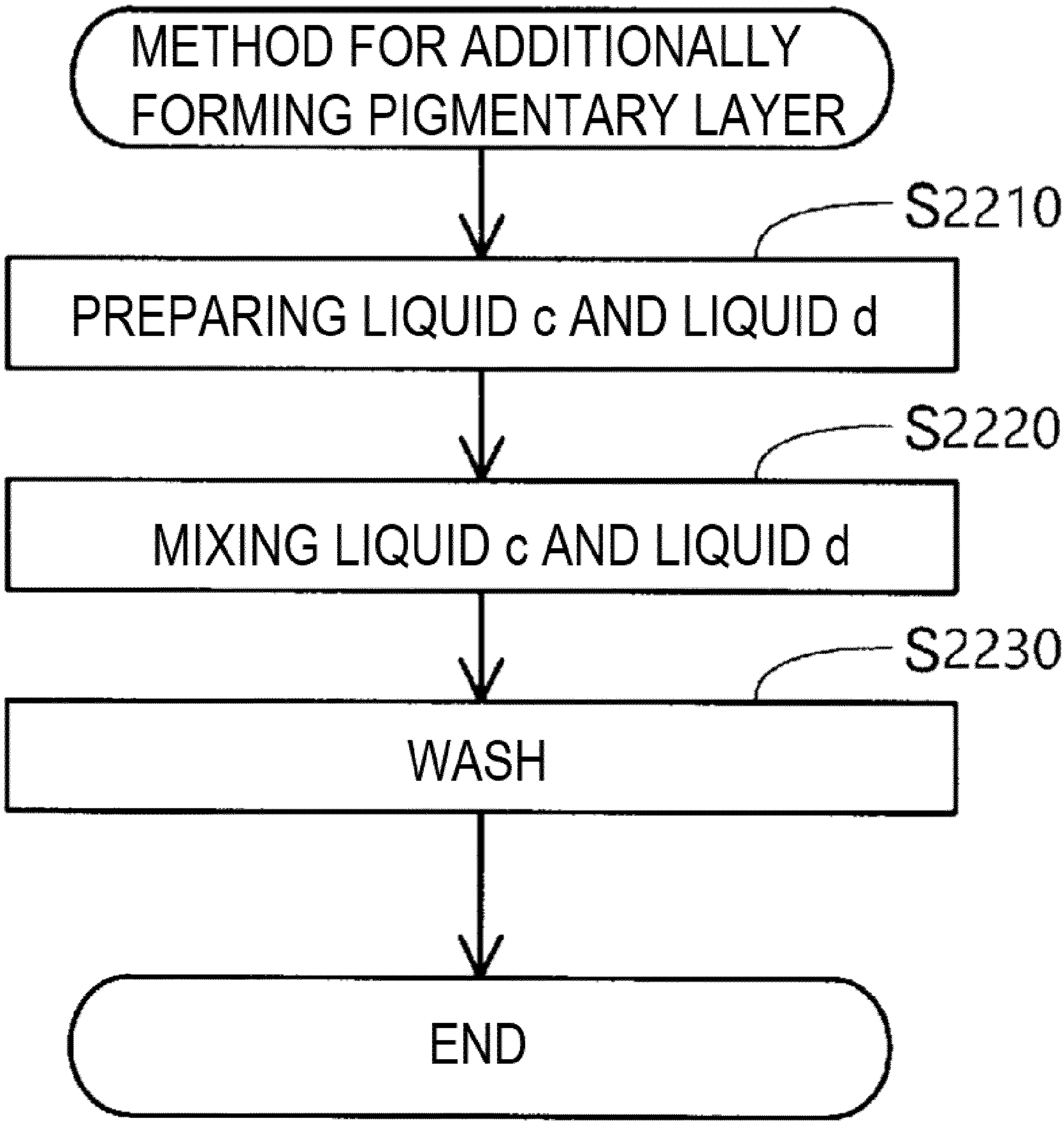
METHOD FOR ADDITIONALLY FORMING PIGMENTARY LAYER
S2210
PREPARING LIQUID c AND LIQUID d
S2220
MIXING LIQUID c AND LIQUID d
S2230
WASH
END

FIG.8

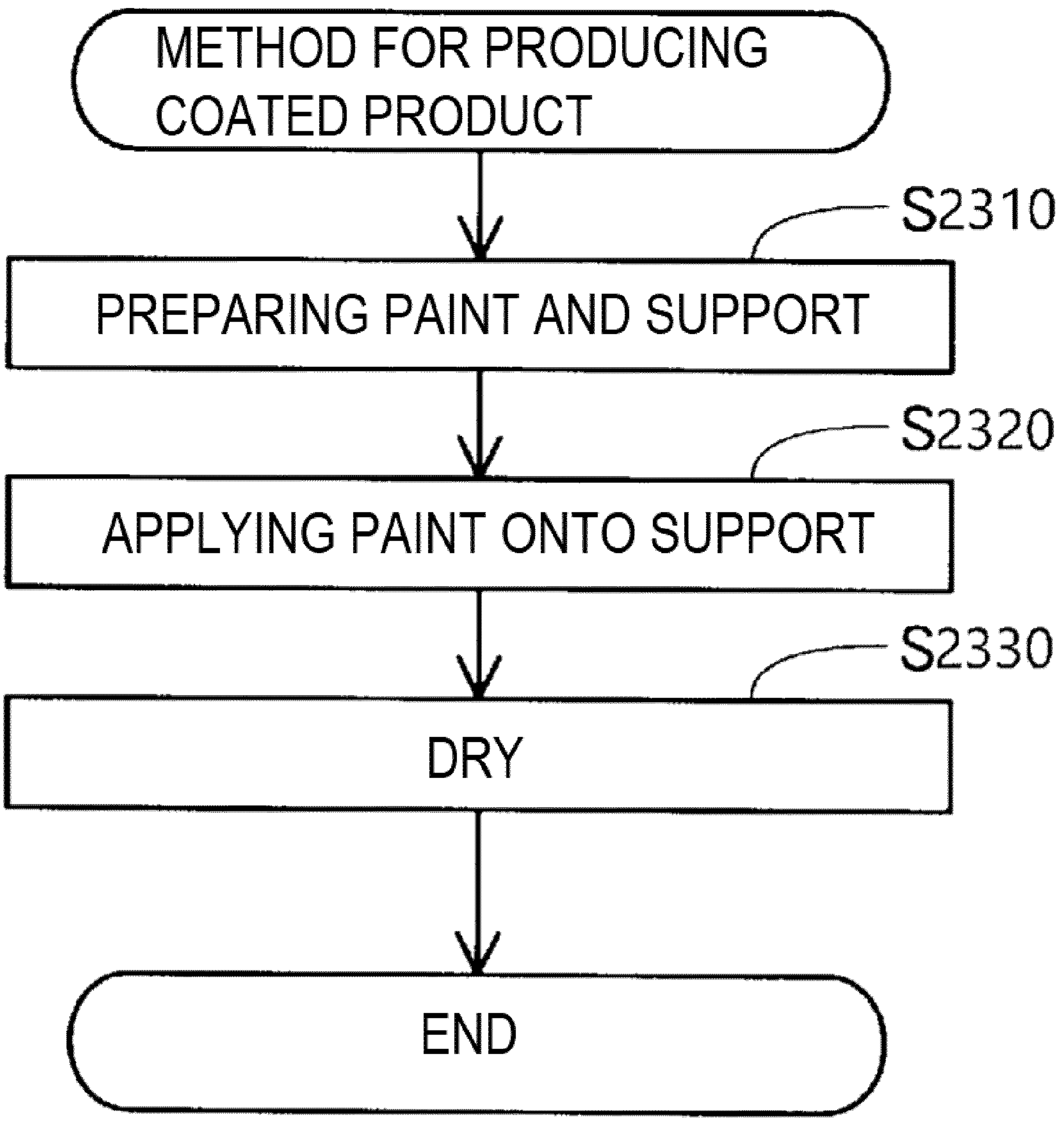
METHOD FOR PRODUCING COATED PRODUCT
S2310
PREPARING PAINT AND SUPPORT
S2320
APPLYING PAINT ONTO SUPPORT
S2330
DRY
END

FIG.9

| SAMPLE | COLOR MATERIAL | SUPPORT | COLOR OF PIGMENTARY LAYER | STRUCTURAL COLOR |
|---|---|---|---|---|
| 2-1 | A | POROUS PLATE | REDDISH BROWN | GREEN |
| 2-2 | B | POROUS PLATE | BLUISH PURPLE | GREEN |
| 2-3 | C | POROUS PLATE | BLUISH PURPLE | RED |
| 2-4 | A | GLASS PLATE | REDDISH BROWN | GREEN |
| 2-5 | A | DRAWING PAPER | REDDISH BROWN | GREEN |
| 2-6 | D | POROUS PLATE | REDDISH BROWN | – |
| 2-7 | E | POROUS PLATE | BLUISH PURPLE | – |

FIG.10

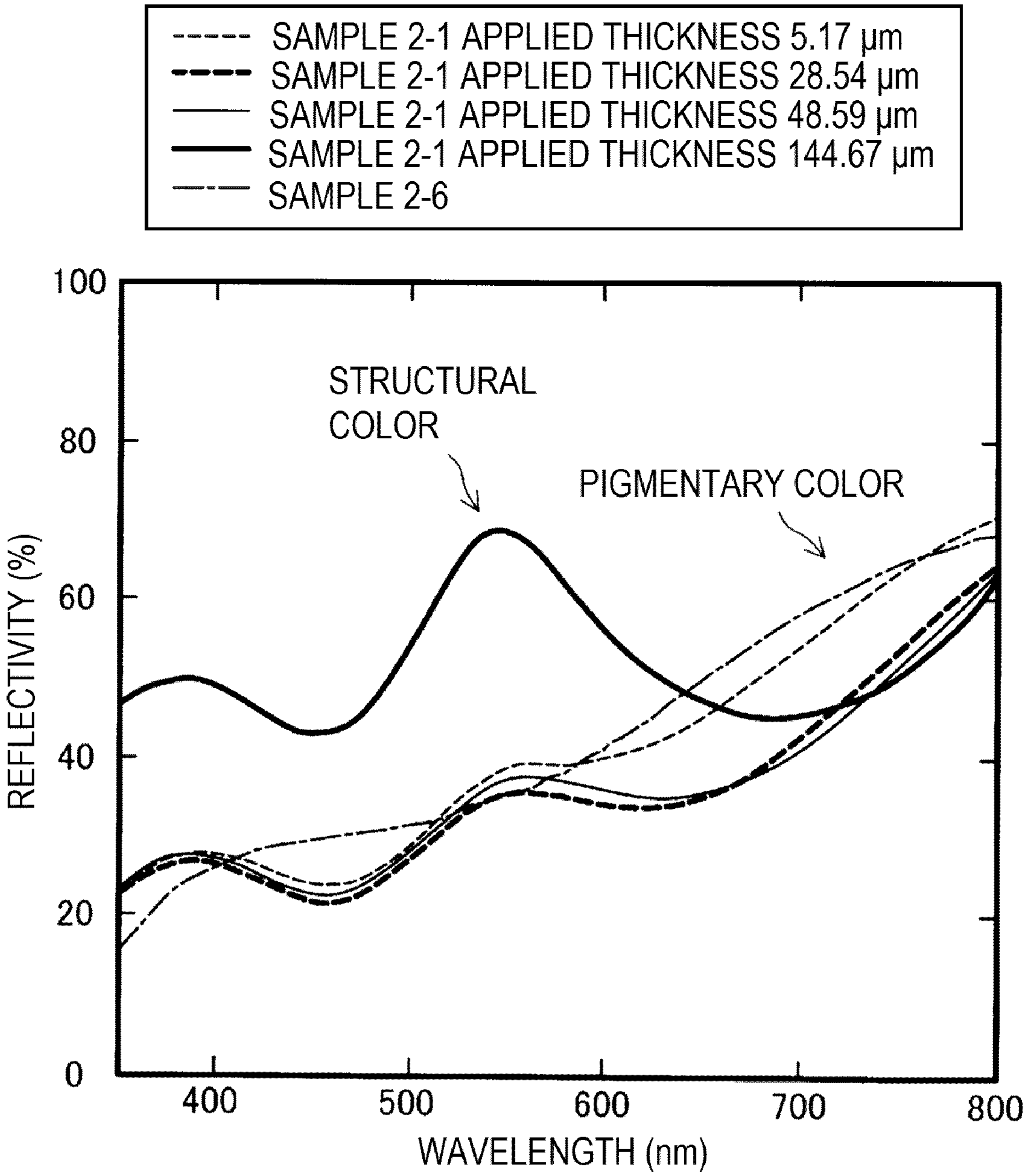
SAMPLE 2-1 APPLIED THICKNESS 5.17 µm
SAMPLE 2-1 APPLIED THICKNESS 28.54 µm
SAMPLE 2-1 APPLIED THICKNESS 48.59 µm
SAMPLE 2-1 APPLIED THICKNESS 144.67 µm
SAMPLE 2-6
STRUCTURAL COLOR
PIGMENTARY COLOR
REFLECTIVITY (%)
100
80
60
40
20
0
400
500
600
700
800
WAVELENGTH (nm)

FIG.11

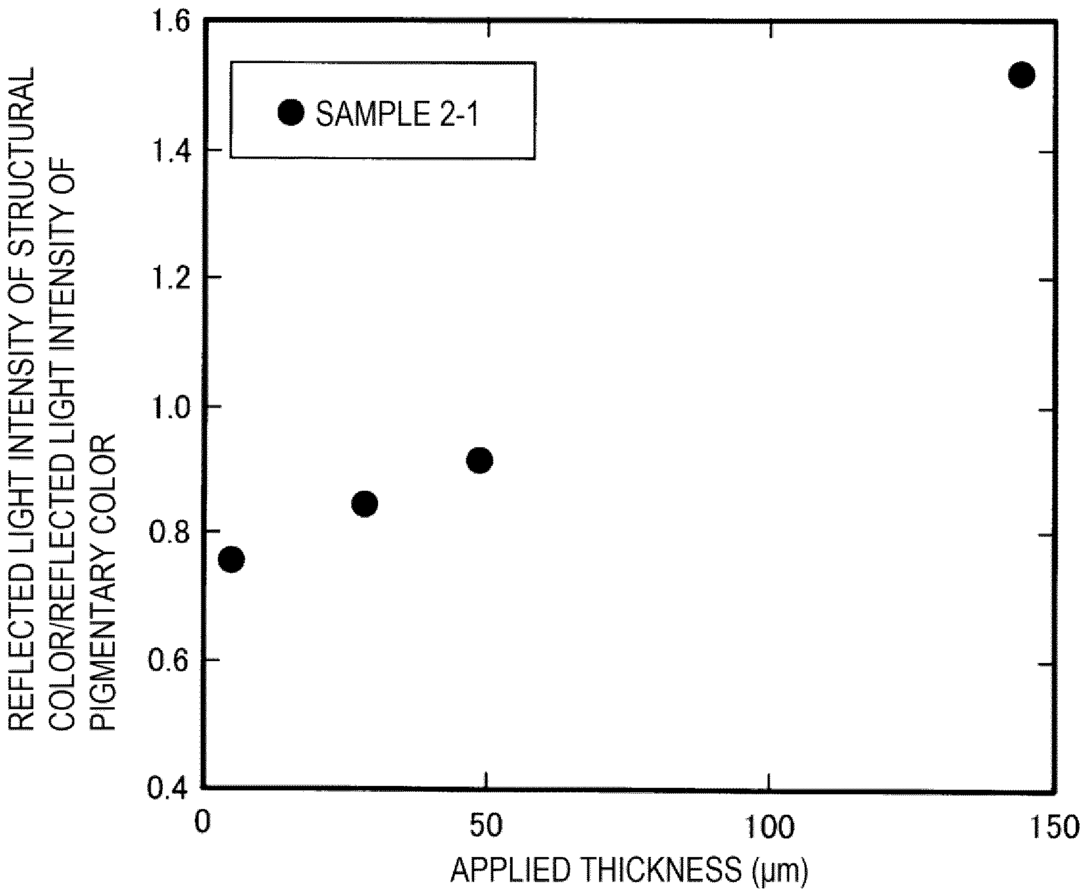

SAMPLE 2-1
1.6
1.4
1.2
1.0
0.8
0.6
0.4
0
50
100
150
REFLECTED LIGHT INTENSITY OF STRUCTURAL COLOR/REFLECTED LIGHT INTENSITY OF PIGMENTARY COLOR
APPLIED THICKNESS (μm)

FIG.12

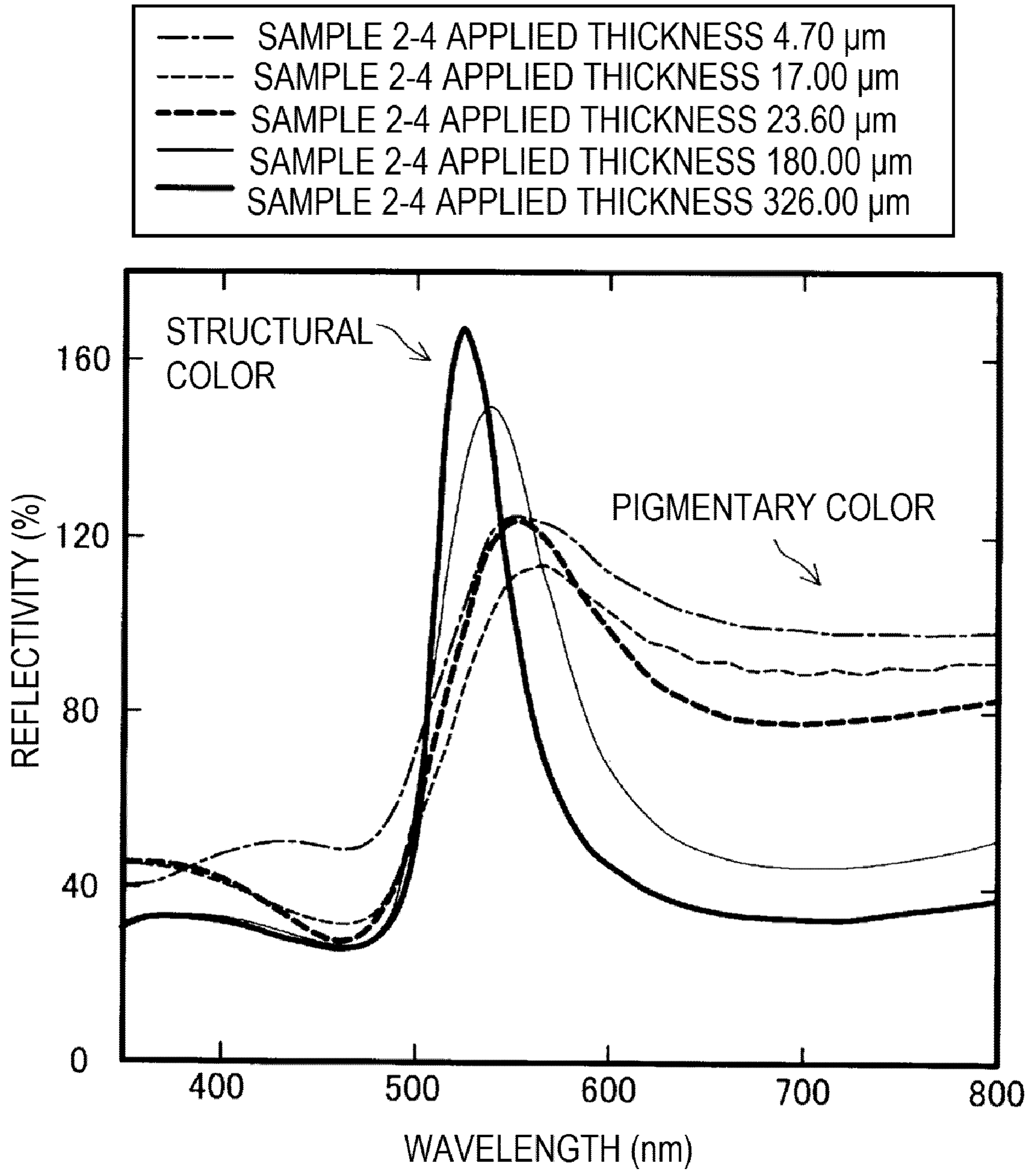
SAMPLE 2-4 APPLIED THICKNESS 4.70 μm
SAMPLE 2-4 APPLIED THICKNESS 17.00 μm
SAMPLE 2-4 APPLIED THICKNESS 23.60 μm
SAMPLE 2-4 APPLIED THICKNESS 180.00 μm
SAMPLE 2-4 APPLIED THICKNESS 326.00 μm
STRUCTURAL COLOR
PIGMENTARY COLOR
REFLECTIVITY (%)
0
40
80
120
160
400
500
600
700
800
WAVELENGTH (nm)

FIG.13

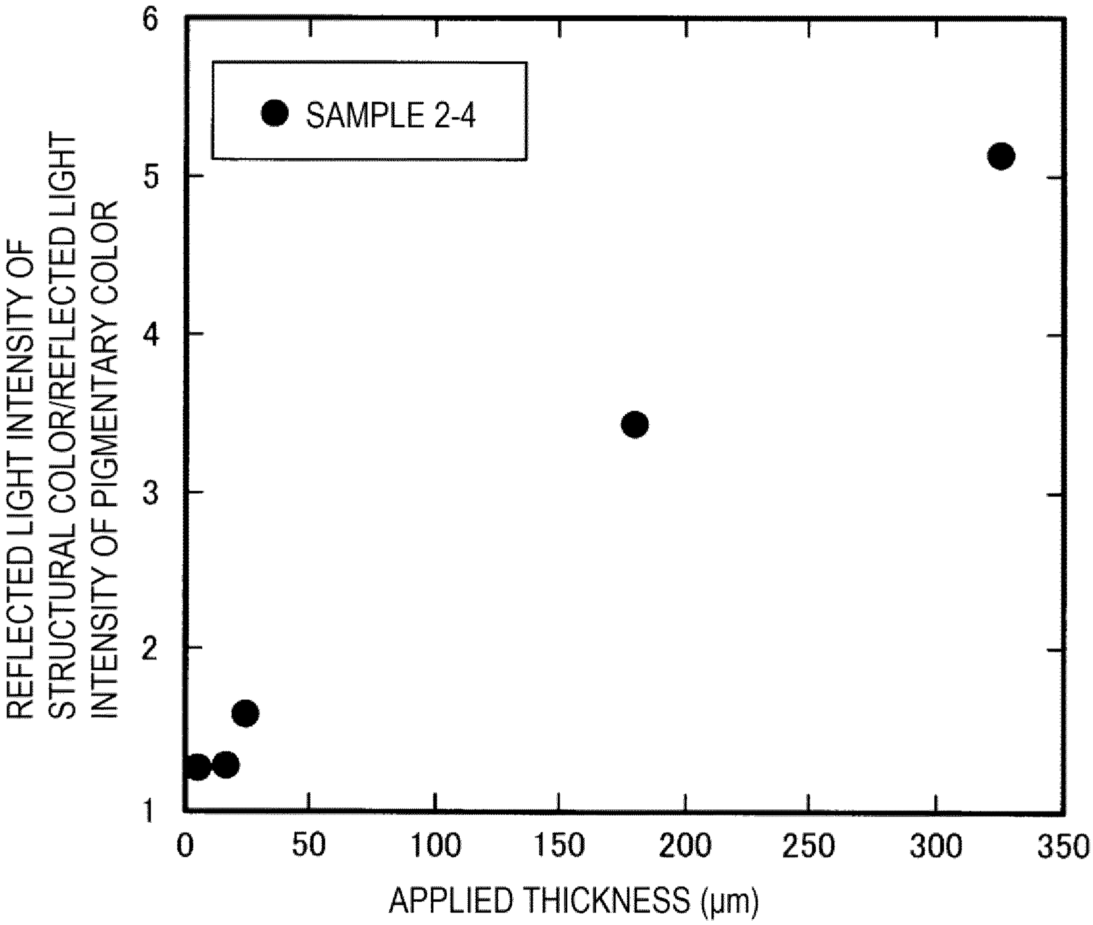

SAMPLE 2-4
REFLECTED LIGHT INTENSITY OF STRUCTURAL COLOR/REFLECTED LIGHT INTENSITY OF PIGMENTARY COLOR
APPLIED THICKNESS (μm)
1
2
3
4
5
6
0
50
100
150
200
250
300
350

FIG.14

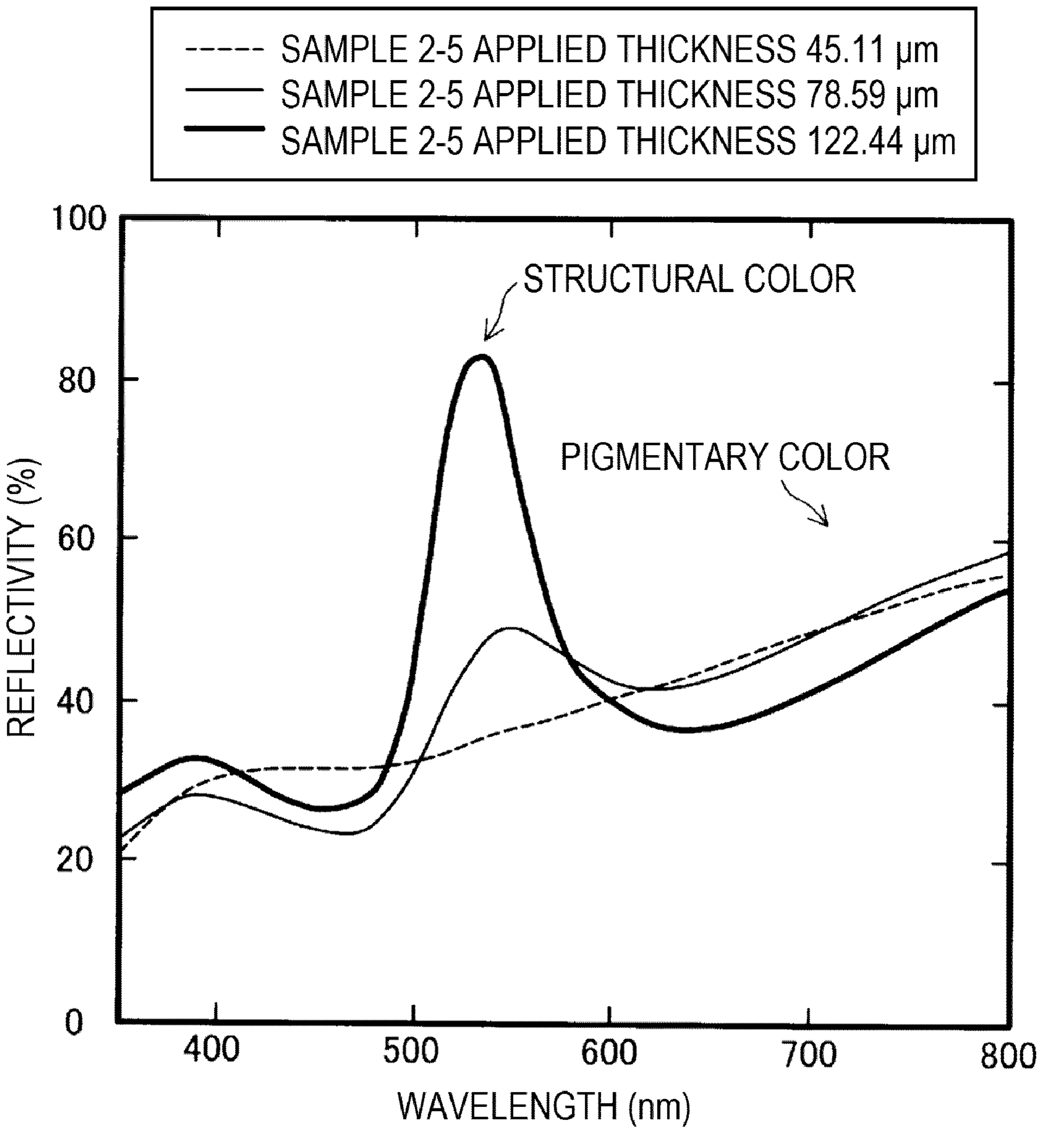
SAMPLE 2-5 APPLIED THICKNESS 45.11 μm
SAMPLE 2-5 APPLIED THICKNESS 78.59 μm
SAMPLE 2-5 APPLIED THICKNESS 122.44 μm
STRUCTURAL COLOR
PIGMENTARY COLOR
REFLECTIVITY (%)
0
20
40
60
80
100
400
500
600
700
800
WAVELENGTH (nm)

FIG.15

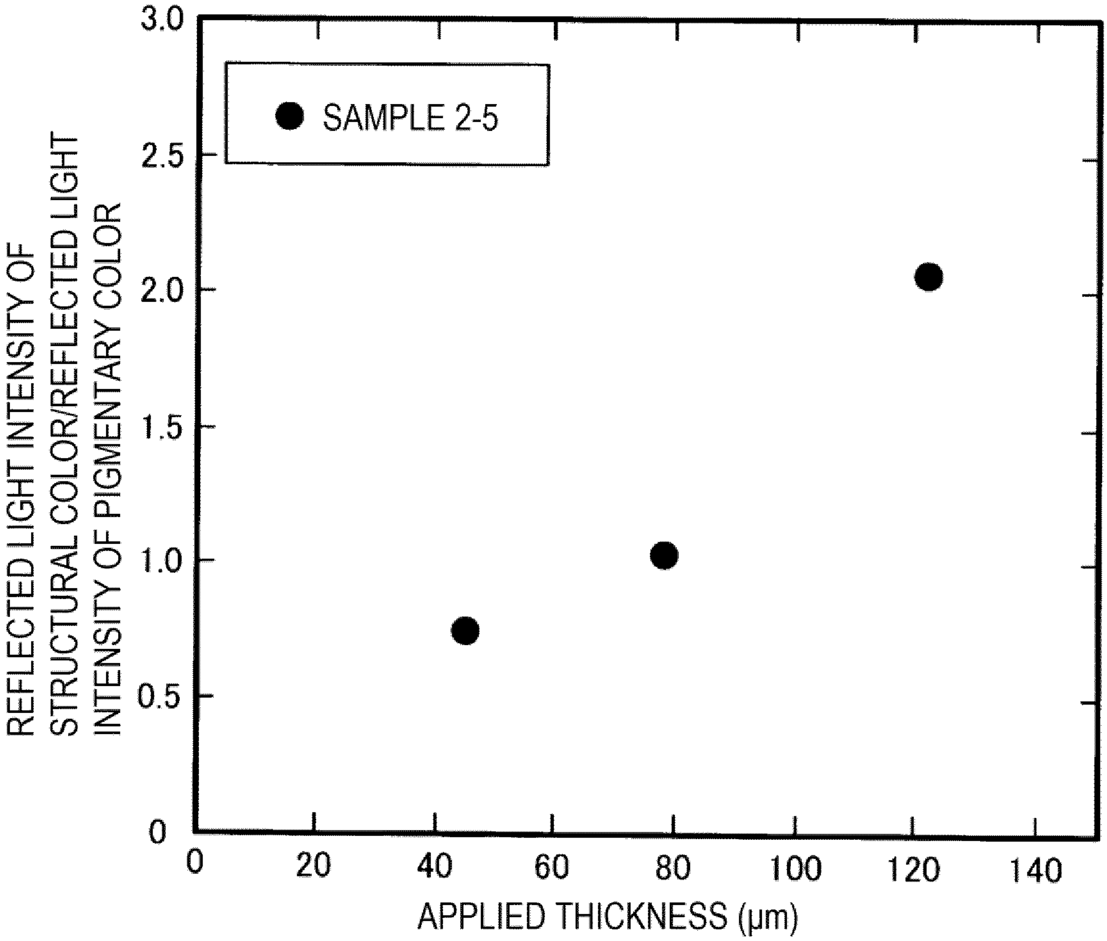
3.0
2.5
2.0
1.5
1.0
0.5
0
SAMPLE 2-5
REFLECTED LIGHT INTENSITY OF STRUCTURAL COLOR/REFLECTED LIGHT INTENSITY OF PIGMENTARY COLOR
0
20
40
60
80
100
120
140
APPLIED THICKNESS (μm)

**INTERNATIONAL SEARCH REPORT**

International application No.
**PCT/JP2021/038765**

**A. CLASSIFICATION OF SUBJECT MATTER**

***C09C 1/28***(2006.01)i; ***C09C 3/08***(2006.01)i; ***C09D 201/00***(2006.01)i; ***C09D 7/41***(2018.01)i; ***C09D 7/62***(2018.01)i
FI: C09C3/08; C09D201/00; C09D7/41; C09C1/28; C09D7/62

According to International Patent Classification (IPC) or to both national classification and IPC

**B. FIELDS SEARCHED**

Minimum documentation searched (classification system followed by classification symbols)

C09C1/28; C09C3/08; C09D201/00; C09D7/41; C09D7/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CASREACT (STN)

**C. DOCUMENTS CONSIDERED TO BE RELEVANT**

| Category* | Citation of document, with indication, where appropriate, of the relevant passages | Relevant to claim No. |
|---|---|---|
| X | SAKAI, M. et al., Colorful photonic pigments prepared by using safe black and white materials, ACS Sustainable Chemistry Engineering, 2019, vol. 7, no. 17, pp. 14933-14940<br>abstract, fig. 1, 4, 5, p. 14935, right column, lines 2-7, p. 14936, left column, line 11 from the bottom to right column, line 4, conclusion, methods, Method of Applying a Black Film Formed of TA and Fe3+ to Silica Fine Particles | 1-9 |
| A | JP 2009-249527 A (NIPPON PAINT CO., LTD.) 29 October 2009 (2009-10-29)<br>entire text | 1-9 |
| A | JP 2012-214740 A (NIPPON SHEET GLASS CO., LTD.) 08 November 2012 (2012-11-08)<br>entire text | 1-9 |
| A | CN 111363189 A (TIANJIN UNIVERSITY) 03 July 2020 (2020-07-03)<br>entire text | 1-9 |
| A | CN 110003882 A (NATIONAL DONG HWA UNIVERSITY) 12 July 2019 (2019-07-12)<br>entire text | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 December 2021** | **11 January 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/038765**

| Patent document cited in search report | | | Publication date (day/month/year) | Patent family member(s) | Publication date (day/month/year) |
|---|---|---|---|---|---|
| JP | 2009-249527 | A | 29 October 2009 | (Family: none) | |
| JP | 2012-214740 | A | 08 November 2012 | (Family: none) | |
| CN | 111363189 | A | 03 July 2020 | (Family: none) | |
| CN | 110003882 | A | 12 July 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014047231 A
- JP 2020178523 A
- JP 2020178525 A